# EUROPEAN PATENT APPLICATION

(11) **EP 4 764 988 A1**
(43) Date of publication of application: **24.06.2026**
(21) Application number: 25224797.8
(22) Date of filing: 18.12.2025
(51) Int. Cl.: G06Q 10/08, G06Q 10/087, G06Q 10/20

(54) **REFILL SYSTEM**

(30) Priority: 20.12.2024 JP 2024224649
(71) Applicant: Seiko Epson Corporation, Tokyo 160-8801 (JP)
(72) Inventor: KAWAKAMI, Yasushi, Suwa-shi, 392-8502 (JP); KITAJIMA, Shiho, Suwa-shi, 392-8502 (JP); MINAMI, Tomokazu, Suwa-shi, 392-8502 (JP)
(74) Representative: Lewis Silkin LLP

(57) **Abstract**

A refill system includes a refill apparatus that executes a refill operation on a container, a control apparatus that controls the refill operation of the refill apparatus, and a management apparatus that manages the control apparatus, in which the control apparatus and the management apparatus are configured to communicate with each other via a network.

## Description

The present application is based on, and claims priority from JP Application Serial Number 2024-224649, filed December 20, 2024, the disclosure of which is hereby incorporated by reference herein in its entirety.

### BACKGROUND

### 1. Technical Field

The present disclosure relates to a technology for a refill system.

### 2. Related Art

In the related art, a system with which a user of a printing apparatus pays a rate fee for a predetermined maintenance agreement period in advance so that the user can be provided with consumables without paying an actual cost of the consumables when the consumables are replaced within the agreement period is known (JP-A-2007-156531). In this system, the printing apparatus owned by the user, a management apparatus that manages information on the printing apparatus, and a server that manages a maintenance agreement or delivery of the consumables using information acquired from the management apparatus communicate with each other via a network. Accordingly, the user is provided with the consumables corresponding to usage status of the printing apparatus.

In general, a technology for collecting and cleaning a used ink storage container and replenishing the cleaned ink storage container with ink to produce a refill product is known. However, in the system in the related art, a case where another business operator other than a production business operator who produces a new product produces the refill product under management of the production business operator and distributes the refill product again in the market using the network is not taken into consideration. Such an issue is not limited to the consumables related to use of the printing apparatus and is common to a case where a container that can be refilled with contents is collected and cleaned, and the cleaned container is replenished with the contents to produce the refill product.

### SUMMARY

According to an aspect of the present disclosure, there is provided a refill system. The refill system includes a refill apparatus that executes a refill operation on a container, a control apparatus that controls the refill operation of the refill apparatus, and a management apparatus that manages the control apparatus, in which the control apparatus and the management apparatus are configured to communicate with each other via a network.

### BRIEF DESCRIPTION OF THE DRAWINGS

FIG. 1 is a conceptual diagram of a resource recycling system.
FIG. 2 is a block diagram showing a configuration of a refill apparatus in a first embodiment.
FIG. 3 is a block diagram showing a configuration of a control apparatus in the first embodiment.
FIG. 4 is a block diagram showing a configuration of a management apparatus in the first embodiment.
FIG. 5 is a conceptual diagram of a product management table.
FIG. 6 is a conceptual diagram of a business operator management table.
FIG. 7 is a flowchart showing a production management method of a refill product in the first embodiment.
FIG. 8 is a flowchart showing details of an authentication step in the first embodiment.
FIG. 9 is a flowchart showing details of a production step in the first embodiment.
FIG. 10 is a flowchart showing details of a production preparation step in the first embodiment.
FIG. 11 is a first flowchart showing details of a refill operation step in the first embodiment.
FIG. 12 is a second flowchart showing details of the refill operation step in the first embodiment.
FIG. 13 is a third flowchart showing details of the refill operation step in the first embodiment.
FIG. 14 is a fourth flowchart showing details of the refill operation step in the first embodiment.
FIG. 15 is a fifth flowchart showing details of the refill operation step in the first embodiment.
FIG. 16 is a sixth flowchart showing details of the refill operation step in the first embodiment.
FIG. 17 is a flowchart showing details of a record management step in the first embodiment.
FIG. 18 is a flowchart showing details of a number calculation step in the first embodiment.
FIG. 19 is a flowchart showing details of a quantity specifying step in the first embodiment.
FIG. 20 is a flowchart showing details of an alert output step in the first embodiment.
FIG. 21 is a flowchart showing details of a cost calculation step in the first embodiment.
FIG. 22 is a block diagram showing a configuration of a management apparatus in a second embodiment.
FIG. 23 is a flowchart showing a production management method of a refill product in the second embodiment.
FIG. 24 is a flowchart showing details of a supply quantity calculation step in the second embodiment.
FIG. 25 is a block diagram showing a configuration of a management apparatus in a third embodiment.
FIG. 26 is a flowchart showing a first example of an alert output step in the third embodiment.
FIG. 27 is a flowchart showing a second example of the alert output step in the third embodiment.
FIG. 28 is a flowchart showing a third example of the alert output step in the third embodiment.
FIG. 29 is a block diagram showing a configuration of a management apparatus in a fourth embodiment.
FIG. 30 is a flowchart showing details of an alert output step in the fourth embodiment.

### DESCRIPTION OF EMBODIMENTS

### A. First Embodiment

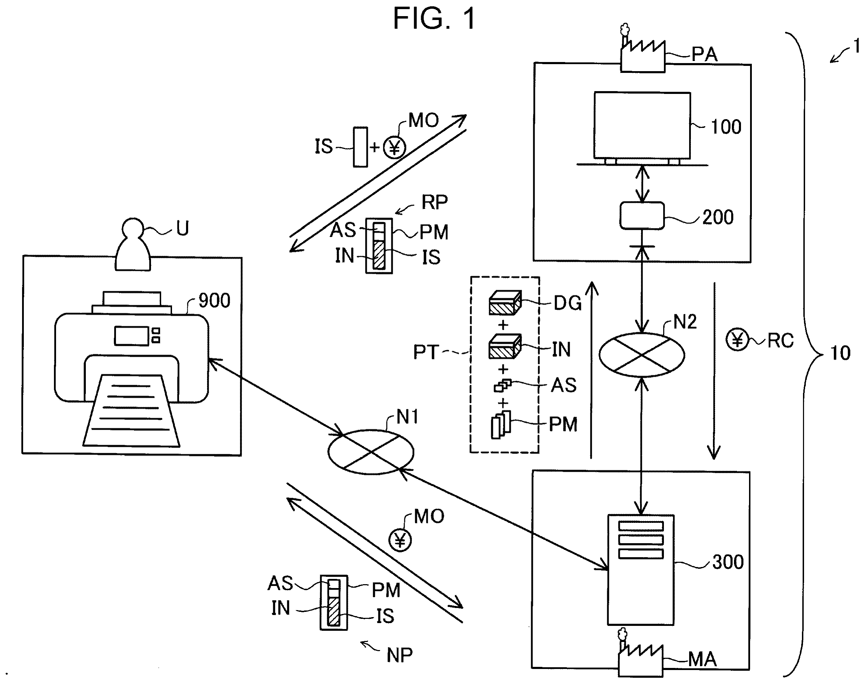

FIG. 1 is a conceptual diagram of a resource recycling system 1. The resource recycling system 1 is a system for repeatedly providing a user U of the printing apparatus 900 with consumables such as an ink cartridge and an ink bottle related to use of the printing apparatus 900. In the resource recycling system 1, first, a new product NP that is produced in a business facility of a production business operator MA and to which product identification information such as a lot number and a serial number is assigned is distributed in the market. The user U pays a price MO to the production business operator MA. Accordingly, the new product NP is provided to the user U. Among types of the new product NP, an ink storage container IS that is used up because ink IN is reduced as the user U uses the ink IN is collected free of charge or for a fee in accordance with usage status of the printing apparatus 900 or a request from the user U. The collected ink storage container IS is cleaned in a business facility of a partner business operator PA who has signed a partnership agreement with the production business operator MA and is replenished with the ink IN supplied from the production business operator MA to be remanufactured as a refill product RP and distributed again in the market. The user U pays the price MO to the partner business operator PA. Accordingly, the refill product RP is provided to the user U. The series of flows of collecting the used ink storage container IS, remanufacturing the used ink storage container IS as the refill product RP, and providing the refill product RP to the user U are repeated. Accordingly, the ink storage container IS is recycled. The products NP and RP as the consumables related to the use of the printing apparatus 900 may be sold to the user U directly from the business operators MA and PA who produce the products NP and RP, or through an intermediary business operator such as a sales company. Out of the products NP and RP, the used ink storage container IS may be directly collected by the partner business operator PA, collected by a collection business operator, not shown, or collected by sending the used ink storage container IS from the user U to the partner business operator PA or the collection business operator. To increase a collection quantity of the ink storage container IS from the user U, the user U may be rewarded in accordance with the collection quantity of the ink storage container IS.

In the present embodiment, the user U pays a rate fee for a predetermined maintenance agreement period to the partner business operator PA in advance. According to this maintenance agreement, various types of information such as the usage status of the printing apparatus 900 are shared with the production business operator MA from the user U via a network N1. Furthermore, various types of information such as collection status of the ink storage container IS are shared with the production business operator MA from the partner business operator PA via a network N2. Accordingly, the production business operator MA determines a provision quantity and a provision time of the refill product RP to be provided to the user U from the partner business operator PA based on the various types of information shared from the user U and the partner business operator PA. The production business operator MA creates a production plan such as a scheduled production quantity of the refill product RP in accordance with the provision quantity and the provision time of the refill product RP. The production business operator MA supplies a member PT to be used for producing the refill product RP to the partner business operator PA in accordance with the production plan. The member PT to be used for producing the refill product RP is, for example, the ink IN, an accessory AS of the ink storage container IS such as an adapter and a cap, and a packaging material PM such as a bag and an outer box for storing the ink storage container IS. The partner business operator PA produces the refill product RP corresponding in number to the scheduled production quantity determined by the production business operator MA using the member PT supplied from the production business operator MA. The partner business operator PA provides the refill product RP in the provision quantity determined by the production business operator MA to the user U at the provision time determined by the production business operator MA. Accordingly, the user U is provided with the products NP and RP without paying the actual cost of the ink storage container IS during the maintenance agreement period. In another embodiment, the user U may pay a product price each time the products NP and RP are provided, instead of paying the rate fee.

The refill product RP is produced using a refill system 10. The refill system 10 includes a refill apparatus 100 that produces the refill product RP by executing a refill operation on the used ink storage container IS, a control apparatus 200 that controls the operation of the refill apparatus 100, and a management apparatus 300 that manages the control apparatus 200. The refill operation includes at least one of a cleaning operation of cleaning the used ink storage container IS, a replenishing operation of replenishing the ink storage container IS with the ink IN, an attaching operation of attaching the accessory AS of the ink storage container IS, and a packaging operation of packaging the ink storage container IS. The refill operation may include an operation other than the above. The refill operation may include, for example, a collection operation of discharging the ink IN remaining in the used ink storage container IS from the ink storage container IS and collecting the discharged ink IN. The refill operation may include an inspection operation of inspecting whether or not the ink storage container IS is damaged, a cleaning level of the ink storage container IS, and the like. When the refill operation includes a plurality of operations, the refill apparatus 100 may execute all of the plurality of operations included in the refill operation or execute a part of the plurality of operations.

The refill apparatus 100 and the control apparatus 200 are lent for a fee to the partner business operator PA from the production business operator MA and are installed in the business facility of the partner business operator PA. The management apparatus 300 is installed in the business facility of the production business operator MA. The refill apparatus 100 and the control apparatus 200 may be configured to be integrated with each other or be configured to be separated from each other. The refill apparatus 100 and the control apparatus 200 are communicably connected to each other by wired communication via a cable or wireless communication via a network. The control apparatus 200 may be connected with one refill apparatus 100 or a plurality of refill apparatuses 100. The control apparatus 200 and the management apparatus 300 are communicably connected to each other by wireless communication via the network N2. Operation status of the refill operation in the refill apparatus 100 is shared with the management apparatus 300 via the control apparatus 200 by communication among the apparatuses 100, 200, and 300. Accordingly, the partner business operator PA produces the refill product RP under management of the production business operator MA. The production business operator MA calculates a refill production cost RC including a cost of the member PT supplied to the partner business operator PA and the like for each predetermined specific period and sends an invoice for the refill production cost RC to the partner business operator PA. The partner business operator PA pays the refill production cost RC to the production business operator MA in accordance with the invoice sent from the production business operator MA. The specific period may be a period determined in accordance with an elapse of time, such as every month, or a period determined in accordance with the operation status of the refill operation, such as a period after reaching the scheduled production quantity. The production business operator MA may receive a certain amount of money in advance from the partner business operator PA as a deposit and refund a surplus or additionally send an invoice for a deficit in accordance with the number of produced refill products RP or the like. These transactions may be processed on data via the network N2, and an amount of difference may be settled at a predetermined time.

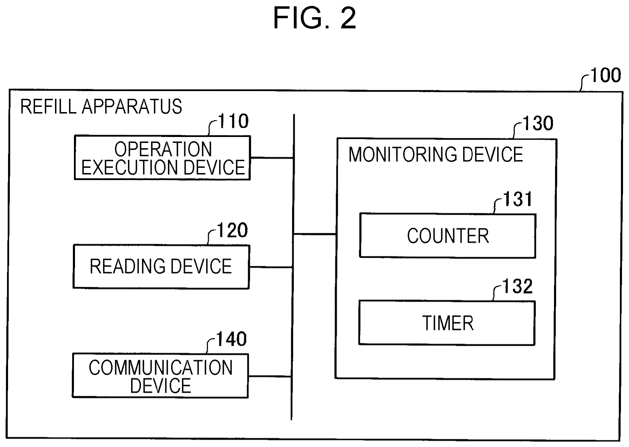

FIG. 2 is a block diagram showing a configuration of the refill apparatus 100 in a first embodiment. The refill apparatus 100 includes an operation execution device 110, a reading device 120, a monitoring device 130, and a communication device 140.

The operation execution device 110 can execute the refill operation. The operation execution device 110 includes, for example, one or more actuators driven under control of the control apparatus 200. The operation execution device 110 has a plurality of operation modes set in accordance with an authentication result of the management apparatus 300. The operation execution device 110 has, for example, a permission mode as an operation mode in which the refill operation can be executed, and a prohibition mode as an operation mode in which the refill operation cannot be executed.

The reading device 120 reads a specific medium to acquire the product identification information and transmits a reading result to the control apparatus 200. The reading device 120 optically reads, for example, a code that is printed on a label attached to the ink storage container IS and that stores the product identification information. The code is, for example, a matrix type two-dimensional code such as a QR code (registered trademark). The code may be a one-dimensional code such as a barcode or a stack type two-dimensional code. The reading device 120 may electrically read a memory that is included in a circuit substrate attached to the ink storage container IS and that stores the product identification information.

The monitoring device 130 monitors the operation status of the refill operation and transmits a monitoring result to the control apparatus 200. In the present embodiment, the monitoring device 130 includes a counter 131 and a timer 132. The counter 131 counts the number of executions of the refill operation. The timer 132 tracks an operation time of the refill operation. The operation time of the refill operation varies for each of a genuine product of an own company, a genuine product of another company, and a compatible product.

The communication device 140 communicates with the control apparatus 200 via wired communication or wireless communication. The communication device 140 is coupled to the operation execution device 110, the reading device 120, and the monitoring device 130.

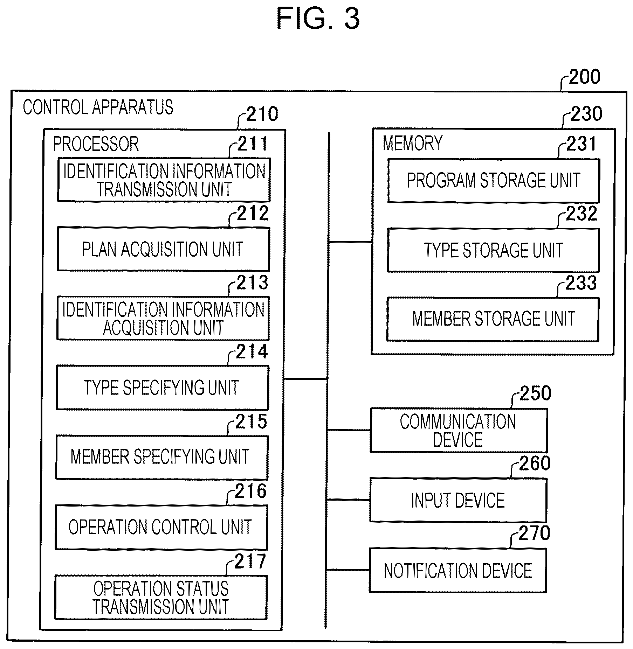

FIG. 3 is a block diagram showing a configuration of the control apparatus 200 in the first embodiment. The control apparatus 200 includes a processor 210, a memory 230, a communication device 250, an input device 260, and a notification device 270.

The communication device 250 communicates with the refill apparatus 100 via wired communication or wireless communication. The communication device 250 further communicates with the management apparatus 300 via wireless communication. The communication device 250 is coupled to the processor 210, the memory 230, the input device 260, and the notification device 270.

The input device 260 receives input from the partner business operator PA. The input device 260 is, for example, a touch panel, a mouse, or a keyboard.

The notification device 270 notifies the partner business operator PA of various types of information. The notification device 270 is, for example, a display device such as a display. The notification device 270 may be an audio generation device such as a speaker.

The memory 230 is a computer-readable recording medium and is an internal storage device in a computer, such as a RAM or a ROM, an external storage device such as a hard disk, or a combination thereof. The memory 230 includes a program storage unit 231, a type storage unit 232, and a member storage unit 233. The program storage unit 231 stores various programs to be executed by the processor 210.

The type storage unit 232 stores information for specifying a type of the ink storage container IS, such as a model number of the ink storage container IS. For example, the type storage unit 232 stores, in advance, a model number table, not shown, in which product identification information and the model number of the ink storage container IS are associated with each other. The type storage unit 232 may store the type of the ink storage container IS received from the management apparatus 300 in accordance with the product identification information or store the type of the ink storage container IS manually registered by the partner business operator PA in accordance with the product identification information.

The member storage unit 233 stores a configuration of the member PT corresponding to the type of the ink storage container IS. For example, the member storage unit 233 stores, in advance, a member table, not shown, showing the configuration of the member PT for each type of the ink storage container IS. In the member table, for example, a type and a replenishing amount of the ink IN, a type of the accessory AS, and a type of the packaging material PM are shown for each type of the ink storage container IS. The member storage unit 233 may store the configuration of the member PT received from the management apparatus 300 in accordance with the type of the ink storage container IS or store the configuration of the member PT manually registered by the partner business operator PA in accordance with the type of the ink storage container IS.

The processor 210 functions as an identification information transmission unit 211, a plan acquisition unit 212, an identification information acquisition unit 213, and a type specifying unit 214 by executing a program stored in the program storage unit 231. The processor 210 functions as a member specifying unit 215, an operation control unit 216, and an operation status transmission unit 217 by executing a program stored in the program storage unit 231.

The identification information transmission unit 211 transmits apparatus identification information that is identification information of the control apparatus 200, to the management apparatus 300. The apparatus identification information is, for example, an ID and a password assigned from the production business operator MA by signing a partnership agreement with the production business operator MA. In this case, the identification information transmission unit 211 transmits, for example, the ID and the password input by the partner business operator PA via the input device 260 to the management apparatus 300. The apparatus identification information may be identification information unique to each control apparatus 200, such as a lot number or a serial number. In this case, the identification information transmission unit 211 may transmit the apparatus identification information stored in an identification information storage unit, not shown, of the memory 230 to the management apparatus 300.

The plan acquisition unit 212 acquires the production plan from the management apparatus 300. The production plan includes, for example, the scheduled production quantity.

The identification information acquisition unit 213 acquires the product identification information using the reading result of the reading device 120. For example, when a captured image including the code is transmitted from the reading device 120 to the control apparatus 200 as the reading result, the identification information acquisition unit 213 executes the following process. In this case, the identification information acquisition unit 213, for example, generates a binary image by performing a binarization process on the captured image including the code and acquires the product identification information by decoding the code included in the binary image in accordance with a predetermined standard. When an electrical signal representing the product identification information is transmitted from the reading device 120 to the control apparatus 200 as the reading result, the identification information acquisition unit 213 may acquire the product identification information by analyzing the electrical signal. The identification information acquisition unit 213 transmits the acquired product identification information to the management apparatus 300.

The type specifying unit 214 specifies the type of the ink storage container IS from the product identification information with reference to the type storage unit 232. For example, the type specifying unit 214 specifies the type of the ink storage container IS by specifying the model number of the ink storage container IS corresponding to the product identification information acquired by the identification information acquisition unit 213 with reference to the model number table stored in the type storage unit 232. The type specifying unit 214 may specify the type of the ink storage container IS by reading the type of the ink storage container IS received from the management apparatus 300 or the type of the ink storage container IS manually registered by the partner business operator PA from the type storage unit 232.

The member specifying unit 215 specifies the configuration of the member PT corresponding to the type of the ink storage container IS specified by the type specifying unit 214 with reference to the member storage unit 233. For example, the member specifying unit 215 acquires the configuration of the member PT corresponding to the type of the ink storage container IS specified by the type specifying unit 214 with reference to the member table stored in the member storage unit 233. Accordingly, the member specifying unit 215 specifies the configuration of the member PT to be used for producing the refill product RP, such as the type and the replenishing amount of the ink IN, the type of the accessory AS, and the type of the packaging material PM. The member specifying unit 215 may specify the configuration of the member PT to be used for producing the refill product RP by reading the configuration of the member PT received from the management apparatus 300 or the configuration of the member PT manually registered by the partner business operator PA from the member storage unit 233.

When the operation of the refill apparatus 100 is permitted by the management apparatus 300, the operation control unit 216 sets the operation mode of the operation execution device 110 to the permission mode. Meanwhile, when the operation of the refill apparatus 100 is not permitted by the management apparatus 300, the operation control unit 216 sets the operation mode of the operation execution device 110 to the prohibition mode. Accordingly, when the operation of the refill apparatus 100 is permitted by the management apparatus 300, the operation control unit 216 drives the operation execution device 110 to produce the refill product RP using the member PT specified by the member specifying unit 215.

The operation status transmission unit 217 acquires the monitoring result of the monitoring device 130 in the specific period and transmits the monitoring result to the management apparatus 300 as the operation status of the refill operation. In the present embodiment, the operation status transmission unit 217 acquires the monitoring result including an output result of the counter 131 indicating the number of executions of the refill operation in the specific period and an output result of the timer 132 indicating the operation time of the refill operation. The operation status transmission unit 217 transmits the operation status of the refill operation including the number of executions of the refill operation in the specific period and the operation time of the refill operation in the specific period to the management apparatus 300. The operation status transmission unit 217 may further transmit used member information related to the member PT used for producing the refill product RP to the management apparatus 300 in association with the product identification information.

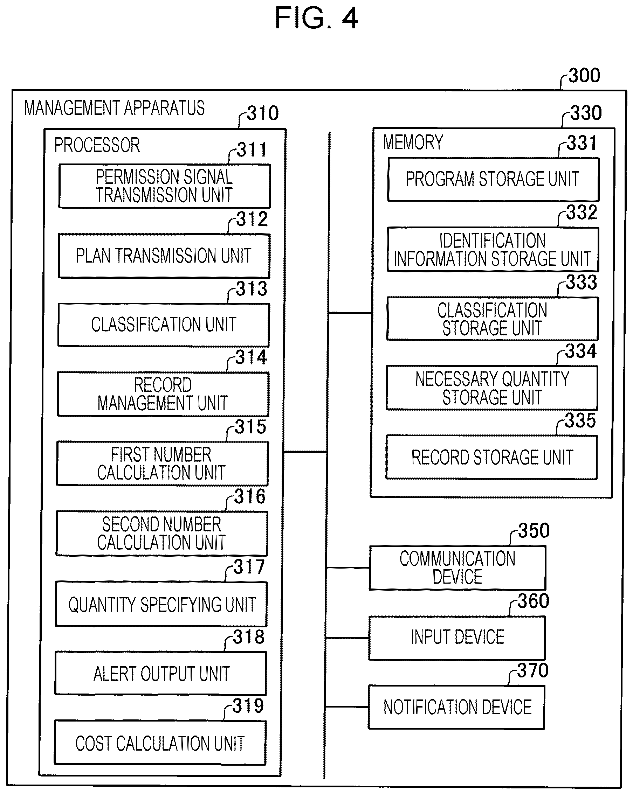

FIG. 4 is a block diagram showing a configuration of the management apparatus 300 in the first embodiment. The management apparatus 300 includes a processor 310, a memory 330, a communication device 350, an input device 360, and a notification device 370.

The communication device 350 communicates with the control apparatus 200 via wireless communication. The communication device 350 is coupled to the processor 310, the memory 330, the input device 360, and the notification device 370.

The input device 360 receives input from the production business operator MA. The input device 360 is, for example, a touch panel, a mouse, or a keyboard.

The notification device 370 notifies the production business operator MA of various types of information. The notification device 370 is, for example, a display device such as a display. The notification device 370 may be an audio generation device such as a speaker.

The memory 330 is a computer-readable recording medium and is an internal storage device in a computer, such as a RAM or a ROM, an external storage device such as a hard disk, or a combination thereof. The memory 330 includes a program storage unit 331, an identification information storage unit 332, a classification storage unit 333, a necessary quantity storage unit 334, and a record storage unit 335. The program storage unit 331 stores various programs to be executed by the processor 310.

The identification information storage unit 332 stores, in advance, the apparatus identification information of a specific control apparatus 200. In the present embodiment, the apparatus identification information is stored in the identification information storage unit 332 at the start of a partnership agreement period and is deleted from the identification information storage unit 332 at the end of the partnership agreement period. Thus, the identification information storage unit 332 of the present embodiment stores the apparatus identification information of the control apparatus 200 lent to the partner business operator PA during the partnership agreement period.

The classification storage unit 333 stores information for classifying the ink storage container IS as any one of the genuine product of the own company, the genuine product of the other company different from the own company, or the compatible product other than the genuine product of the own company and the genuine product of the other company. The genuine product of the own company is a regular ink storage container IS provided from the production business operator MA that owns the management apparatus 300. The genuine product of the other company is a regular ink storage container IS provided from another production business operator MA competing with the production business operator MA that owns the management apparatus 300. The compatible product is a non-regular ink storage container IS provided from another business operator other than the production business operator MA. For example, the classification storage unit 333 stores, in advance, a classification table, not shown, including the product identification information of the genuine product of the own company and the product identification information of the genuine product of the other company. The classification storage unit 333 may store features of the exterior of the ink storage container IS to classify the ink storage container IS from the exterior of the ink storage container IS.

The necessary quantity storage unit 334 stores a necessary member quantity. The necessary member quantity is the quantity of the member PT necessary for producing the refill product RP. The necessary member quantity is correlated with at least one of the number of executions of the refill operation in the specific period and the operation time of the refill operation in the specific period. For example, the necessary quantity storage unit 334 stores, in advance, a correlation table showing the necessary member quantity, for each type of the ink storage container IS, corresponding to the operation status of the refill operation for each type of the member PT.

The record storage unit 335 stores a production record of the refill apparatus 100. The record storage unit 335 stores, for example, a product management table showing the production record of the refill product RP for each of the products NP and RP and a business operator management table showing the production record of the refill product RP for each partner business operator PA.

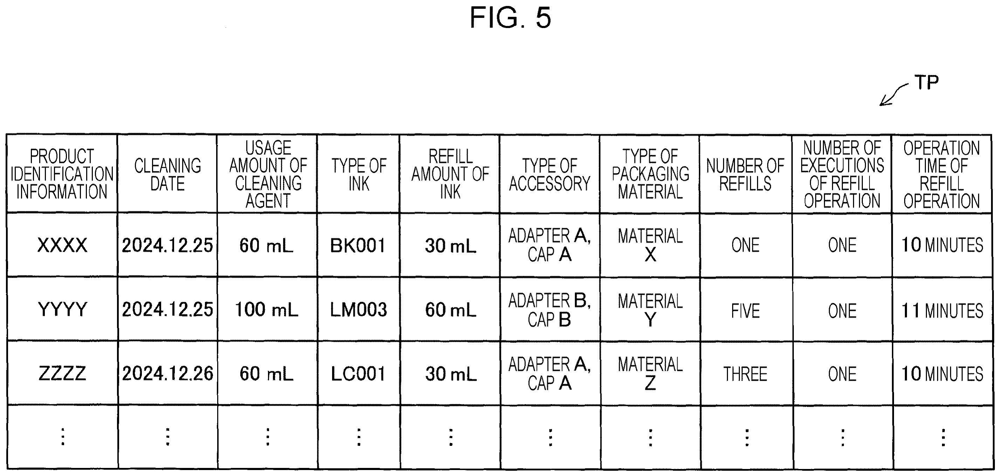

FIG. 5 is a conceptual diagram of a product management table TP. For example, in the product management table TP, a date when the refill product RP is produced, a usage amount of a cleaning agent DG used for producing the refill product RP, the type and the replenishing amount of the ink IN, the type of the accessory AS, and the type of the packaging material PM are stored in association with the product identification information. Furthermore, in the product management table TP, the number of refills of the ink storage container IS and the operation status of the refill operation are stored in association with the product identification information. The product management table TP may store information other than the above. For example, the product management table TP may store the apparatus identification information, business operator information related to the partner business operator PA, and warehouse information related to a warehouse storing the used ink storage container IS or the refill product RP. In principle, the product identification information is limited to the refill product RP of the own company. However, when the agreement is signed with another competing company, identification information related to the consumables of the other company may be stored and managed.

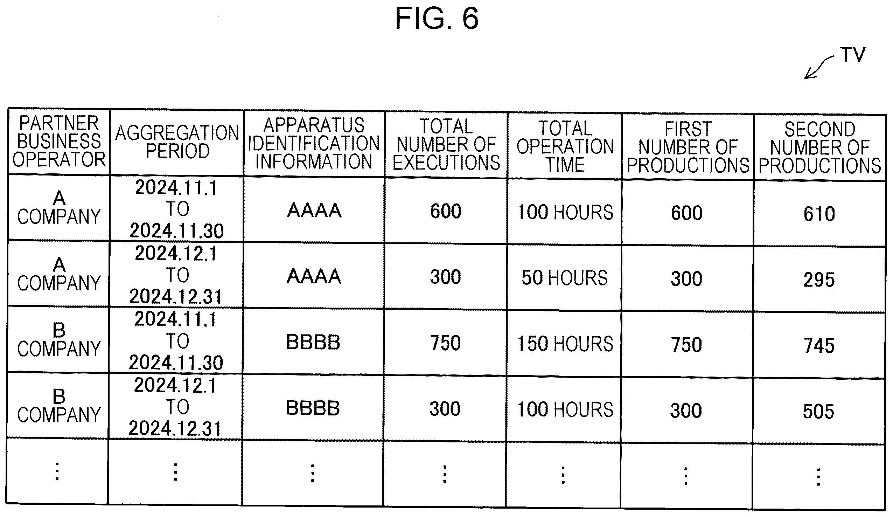

FIG. 6 is a conceptual diagram of a business operator management table TV. For example, in the business operator management table TV, the apparatus identification information of the control apparatus 200 corresponding to the refill apparatus 100 used for producing the refill product RP, the operation status of the refill operation, and the number of produced refill products RP are stored for each specific period. In the example shown in FIG. 6, a total number of executions of the refill operation in the specific period and a total operation time of the refill operation in the specific period are stored as the operation status of the refill operation. In FIG. 6, a first number of produced products is the number of produced refill products RP calculated by a first number calculation unit 315 described later. A second number of produced products is the number of produced refill products RP calculated by a second number calculation unit 316 described later. The business operator management table TV may store information other than the above. For example, the business operator management table TV may store a type and a supply quantity of the member PT supplied to the partner business operator PA from the production business operator MA, a usage quantity of the member PT in the specific period, and a stock quantity of the member PT at the end of the specific period.

As shown in FIG. 4, the processor 310 functions as a permission signal transmission unit 311, a plan transmission unit 312, a classification unit 313, and a record management unit 314 by executing a program stored in the program storage unit 331. The processor 310 further functions as the first number calculation unit 315, the second number calculation unit 316, a quantity specifying unit 317, an alert output unit 318, and a cost calculation unit 319 by executing a program stored in the program storage unit 331.

The permission signal transmission unit 311 compares the apparatus identification information received from the identification information transmission unit 211 with the apparatus identification information stored in the identification information storage unit 332. When the apparatus identification information received from the identification information transmission unit 211 matches the apparatus identification information stored in the identification information storage unit 332, the permission signal transmission unit 311 allows the control apparatus 200 to permit the refill operation of the refill apparatus 100. When the refill operation of the refill apparatus 100 is permitted, the permission signal transmission unit 311 transmits, for example, an authentication code to the control apparatus 200.

The plan transmission unit 312 transmits the production plan to the control apparatus 200. The production plan is determined based on the various types of information shared from the user U and the partner business operator PA.

The classification unit 313 classifies the ink storage container IS as one of the genuine product of the own company, the genuine product of the other company, or the compatible product with reference to the classification storage unit 333. For example, when the product identification information acquired by the identification information acquisition unit 213 is included in the classification table stored in the classification storage unit 333, the classification unit 313 classifies the ink storage container IS as follows. In this case, the classification unit 313 classifies the ink storage container IS as any of the genuine product of the own company or the genuine product of the other company in accordance with the product identification information acquired by the identification information acquisition unit 213. Meanwhile, when the product identification information acquired by the identification information acquisition unit 213 is not included in the classification table stored in the classification storage unit 333, the classification unit 313 classifies the ink storage container IS as the compatible product. The classification unit 313 may specify the exterior of the ink storage container IS by acquiring a detection result from a detection device, not shown, provided in the refill apparatus 100 and classify the ink storage container IS with reference to the features of the exterior of the ink storage container IS stored in the classification storage unit 333. The detection device is a device that can capture the exterior of the ink storage container IS, and is, for example, an imaging device such as a camera or a sensor such as a laser displacement sensor.

The record management unit 314 manages the production record of the refill product RP by storing the various types of information received from the control apparatus 200 in the record storage unit 335. When the record management unit 314 receives the product identification information from the identification information acquisition unit 213, the record management unit 314 executes the following process. This process is based on the genuine product of the own company of which the identification information can be specified. In this case, the record management unit 314 transmits or adds the number of refills corresponding to the product identification information received from the identification information acquisition unit 213 to the control apparatus 200 in the product management table TP stored in the record storage unit 335. Accordingly, the record management unit 314 manages the number of refills of the ink storage container IS.

For the operation status of the refill operation received from the operation status transmission unit 217, the record management unit 314 further executes the following process. The record management unit 314 stores the operation status of the refill operation received from the operation status transmission unit 217 in the product management table TP stored in the record storage unit 335. Accordingly, the record management unit 314 manages the operation status of the refill operation. In the genuine product of the own company, the operation status of the refill operation may be stored in association with the product identification information.

When the used member information is received from the operation status transmission unit 217 together with the product identification information, the record management unit 314 executes the following process. In this case, the record management unit 314 stores the used member information in association with the product identification information received from the operation status transmission unit 217 in the product management table TP stored in the record storage unit 335. Accordingly, the record management unit 314 manages the member PT used for producing the refill product RP. By doing so, the record management unit 314 manages the production record of the refill product RP for each of the products NP and RP.

When the specific period has elapsed, the record management unit 314 executes the following process. In this case, the record management unit 314 generates the business operator management table TV based on the product management table TP stored in the record storage unit 335 and calculation results of the number calculation units 315 and 316. Accordingly, the production record of the refill product RP such as the number of executions and the operation time of the refill operation in the specific period, the number of produced refill products RP calculated from the number of executions and the operation time, and the usage quantity and the stock quantity of the member PT is managed for each partner business operator PA.

The first number calculation unit 315 calculates the number of produced refill products RP in the specific period as the first number of produced products using the number of executions of the refill operation in the specific period received from the operation status transmission unit 217. That is, the first number of produced products is the number of produced refill products RP estimated from the number of executions of the refill operation. In the present embodiment, the first number calculation unit 315 calculates the first number of produced products using the number of executions of the refill operation for the genuine product of the own company of the ink storage container IS. In this case, the number of executions of the refill operation is counted after reading the product identification information of the genuine product of the own company.

The second number calculation unit 316 calculates the number of produced refill products RP in the specific period as the second number of produced products using the operation time of the refill operation in the specific period received from the operation status transmission unit 217. That is, the second number of produced products is the number of produced refill products RP estimated from the operation time of the refill operation. In the present embodiment, the second number calculation unit 316 calculates the second number of produced products using the operation time of the refill operation for the ink storage container IS including not only the genuine product of the own company but also the genuine product of the other company and the compatible product.

The first number calculation unit 315 may calculate the first number of produced products using the number of executions of the refill operation for the ink storage container IS including not only the genuine product of the own company but also the genuine product of the other company when the agreement is signed with the other company. In this case, when there is a difference between the first number of produced products and the second number of produced products, the difference can be handled by calculating the second number of produced products via the second number calculation unit 316 using the operation time of the refill operation for the genuine product of the own company.

The quantity specifying unit 317 specifies the quantity of the member PT used for producing the refill product RP based on the operation status of the refill operation received from the operation status transmission unit 217 and the necessary member quantity stored in the necessary quantity storage unit 334. That is, while this applies to the genuine product in principle, the other company product is also included when the agreement is signed with the other company. The quantity of the member PT specified by the quantity specifying unit 317 is the usage quantity of the member PT estimated from the operation status of the refill operation and the necessary member quantity. The quantity specifying unit 317, for example, acquires the necessary member quantity corresponding to the operation status of the refill operation received from the operation status transmission unit 217 with reference to the correlation table stored in the necessary quantity storage unit 334. Accordingly, the quantity specifying unit 317 specifies the quantity of the member PT used for producing the refill product RP.

In the present embodiment, as described above, the first number calculation unit 315 calculates the number of produced refill products RP using the number of executions of the refill operation in the specific period for the genuine product of the own company. Accordingly, the number of executions can be basically regarded as the number of refill productions of the genuine product. Meanwhile, the second number calculation unit 316 calculates the number of produced refill products RP using the operation time of the refill operation in the specific period for the ink storage container IS including the genuine product of the other company and the compatible product. Thus, when the partner business operator PA produces the refill product RP from the genuine product of the other company or the compatible product, there may be a difference between the first number of produced products and the second number of produced products. It is also conceivable to track the operation time when the refill product RP is produced from an imitation product which is not legally allowed. When there is a predetermined level of difference or more between the first number of produced products and the second number of produced products, there is a probability that any unauthorized activity such as a refill of the genuine product of the other company, the compatible product, or the imitation product not allowed by the production business operator MA is performed in the partner business operator PA when the refill product RP is produced. When a trouble occurs in producing the refill product RP, such as when the production of the refill product RP temporarily stops because of a failure of the refill apparatus 100, there may be a difference between the first number of produced products and the second number of produced products. Thus, when there is a predetermined level of difference or more between the first number of produced products and the second number of produced products, there is a probability that any trouble has occurred against the intention of the partner business operator PA when the refill product RP is produced. Therefore, when the difference between the first number of produced products and the second number of produced products exceeds a predetermined allowable range, the alert output unit 318 outputs an alert by displaying an alert screen on a display screen of the management apparatus 300 or generating an alert sound from the audio generation device of the management apparatus 300. For example, the allowable range may be a fixed value or a variable value that is set and varies in depending on a first number of produced products and a second number of produced products. When the allowable range is a fixed value, the allowable range may be, for example, less than or equal to 10 or less than or equal to 5. When the allowable range is a variable value, the allowable range may be, for example, less than or equal to a number corresponding to 10% of an average value of the first number of produced products and the second number of produced products, or less than or equal to a number corresponding to 5% of the average value. As the number of produced refill products RP increases, a probability of the difference between the first number of produced products and the second number of produced products increases. Thus, for example, the allowable range may be adjusted in accordance with the scheduled production quantity. Alternatively, the second number of produced products may be read as a time, a time may be calculated from the first number calculation unit 315, and the times may be compared with each other.

The cost calculation unit 319 calculates the refill production cost RC in the specific period based on a specific quantity correlated with the operation status of the refill operation such as the number of produced refill products RP and the usage quantity of the member PT. The cost calculation unit 319 calculates the refill production cost RC using, for example, a calculation formula prepared in advance. For example, the calculation formula includes the refill production cost RC as an objective variable and the specific quantity that changes in accordance with the operation status of the refill operation as an explanatory variable. When the cost calculation unit 319 calculates the refill production cost RC including the cost of the member PT supplied from the production business operator MA to the partner business operator PA and a usage fee of the apparatuses 100 and 200 lent from the production business operator MA to the partner business operator PA, the calculation formula may include the following terms. In this case, the calculation formula may include a term for calculating the cost of the member PT and a term for calculating the usage fee of the apparatuses 100 and 200. In the term for calculating the cost of the member PT, for example, the cost of the member PT used for producing the refill product RP in the specific period is calculated by multiplying a unit price of the member PT by the usage quantity of the member PT specified by the quantity specifying unit 317. In the term for calculating the usage fee of the apparatuses 100 and 200, for example, the usage fee of the apparatuses 100 and 200 in the specific period is calculated by multiplying the usage fee of the apparatuses 100 and 200 per refill product RP by the number of produced refill products RP calculated by the number calculation units 315 and 316. In the term for calculating the usage fee of the apparatuses 100 and 200, the usage fee of the apparatuses 100 and 200 in the specific period may be calculated by multiplying the usage fee of the apparatuses 100 and 200 per unit time by the total operation time of the refill operation. The cost calculation unit 319 may calculate the refill production cost RC including a cost other than the above. The cost calculation unit 319 may calculate the refill production cost RC including, for example, a license usage fee for a brand logo, a patent, and the like of the production business operator MA. Alternatively, the cost calculation unit 319 may calculate the refill production cost RC with reference to a billing table showing the refill production cost RC corresponding to the specific quantity, instead of the calculation formula prepared in advance.

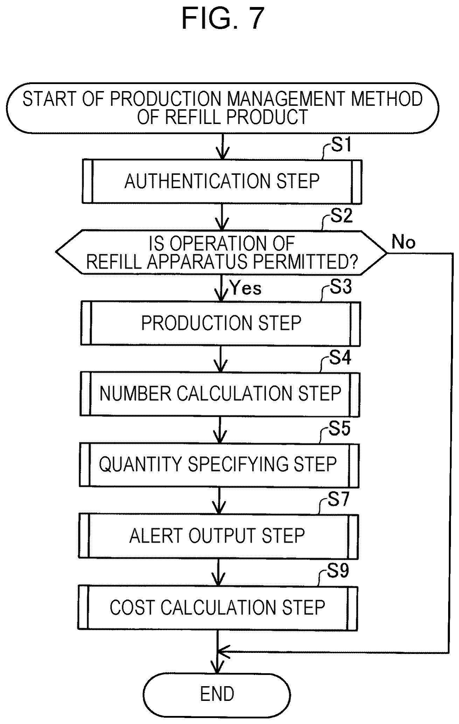

FIG. 7 is a flowchart showing a production management method of the refill product RP in the first embodiment. The production management method is executed when the refill product RP is produced. In the production management method, first, an authentication step in step S1 is executed. In the authentication step, the management apparatus 300 determines whether or not the refill apparatus 100 is operable. When step S2 results in "No", that is, when the operation of the refill apparatus 100 is not permitted by the management apparatus 300, the present flow is finished without producing the refill product RP. When step S2 results in "Yes", that is, when the operation of the refill apparatus 100 is permitted by the management apparatus 300, a production step in step S3 is executed. In the production step, the refill product RP is produced until the number of produced refill products RP reaches the scheduled production quantity. When the number of produced refill products RP reaches the scheduled production quantity, a number calculation step in step S4 and a quantity specifying step in step S5 are executed. In the number calculation step, the number of produced refill products RP is calculated as the specific quantity. In the quantity specifying step, the usage quantity of the member PT is specified as the specific quantity. The number calculation step and the quantity specifying step may be executed in any order. After the number calculation step and the quantity specifying step, an alert output step in step S7 is executed. In the alert output step, the alert is output when a predetermined condition is satisfied. Lastly, a cost calculation step in step S9 is executed. In the cost calculation step, the refill production cost RC in the specific period is calculated based on the specific quantity.

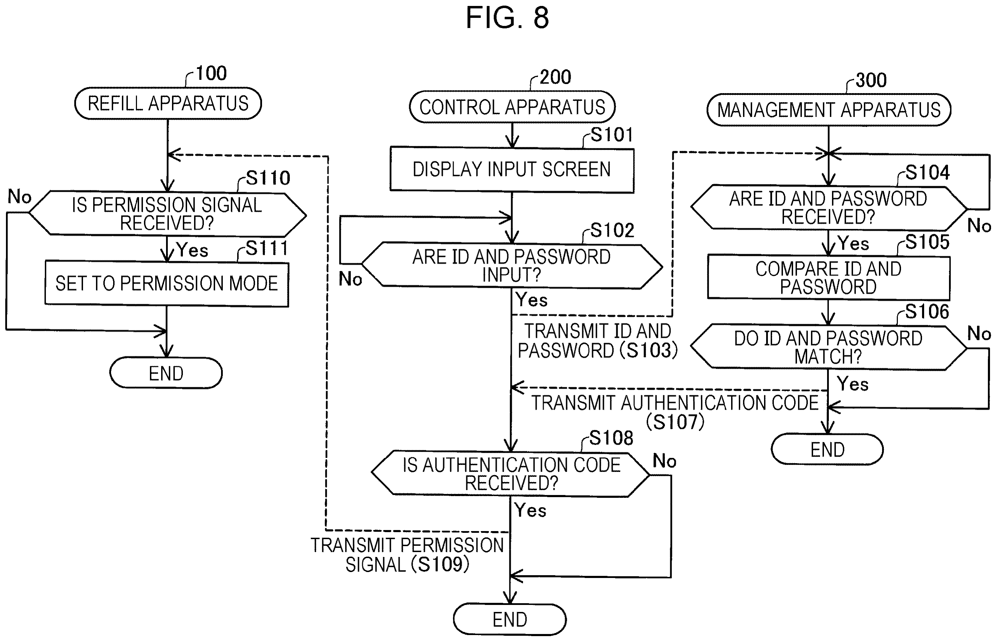

FIG. 8 is a flowchart showing details of the authentication step in the first embodiment. For example, the authentication step starts when an operation of requesting the operation of the refill apparatus 100, such as powering the refill apparatus 100 on, is executed by the partner business operator PA. FIG. 8 illustrates a case where the production business operator MA has signed a partnership agreement with a plurality of partner business operators PA, and different IDs and passwords are assigned to the plurality of partner business operators PA as the apparatus identification information from the production business operator MA.

In step S101, the identification information transmission unit 211 of the control apparatus 200 displays an input screen for the partner business operator PA to input the ID and the password on the display device of the control apparatus 200. When step S102 results in "Yes", that is, when the ID and the password are input by the partner business operator PA via the input device 260, step S103 is executed. In step S103, the identification information transmission unit 211 of the control apparatus 200 transmits the input ID and password to the management apparatus 300. When step S104 results in "Yes", that is, when the management apparatus 300 receives the ID and the password from the control apparatus 200, step S105 is executed. In step S105, the permission signal transmission unit 311 of the management apparatus 300 compares the ID and the password received from the identification information transmission unit 211 of the control apparatus 200 with the ID and the password stored in the identification information storage unit 332 of the management apparatus 300.

When step S106 results in "Yes", that is, when the ID and the password received from the identification information transmission unit 211 of the control apparatus 200 match the ID and the password stored in the identification information storage unit 332 of the management apparatus 300, step S107 is executed. In step S107, the permission signal transmission unit 311 of the management apparatus 300 determines that the refill operation of the refill apparatus 100 can be permitted during the partnership agreement period, and transmits the authentication code to the control apparatus 200. When step S108 results in "Yes", that is, when the control apparatus 200 receives the authentication code within a predetermined time after transmitting the ID and the password to the management apparatus 300, step S109 is executed. In step S109, the operation control unit 216 of the control apparatus 200 determines that the operation of the refill apparatus 100 is permitted by the management apparatus 300, and transmits, to the refill apparatus 100, a permission signal for switching the operation mode of the operation execution device 110 from the prohibition mode to the permission mode. When step S110 results in "Yes", that is, when the refill apparatus 100 receives the permission signal, the operation mode of the operation execution device 110 is set to the permission mode in step S111. Accordingly, the operation mode of the refill apparatus 100 is switched from the prohibition mode to the permission mode, and the refill apparatus 100 enters a state where the refill operation can be executed.

When step S106 results in "No", that is, when the ID and the password received from the identification information transmission unit 211 of the control apparatus 200 do not match the ID and the password stored in the identification information storage unit 332 of the management apparatus 300, the following process is executed. In this case, the permission signal transmission unit 311 of the management apparatus 300 determines that the refill operation of the refill apparatus 100 cannot be permitted outside the partnership agreement period, and finishes the present flow without transmitting the authentication code to the control apparatus 200. When step S108 results in "No", that is, when the control apparatus 200 does not receive the authentication code within the predetermined time after transmitting the ID and the password to the management apparatus 300, the following process is executed. In this case, the operation control unit 216 of the control apparatus 200 determines that the operation of the refill apparatus 100 is not permitted by the management apparatus 300, and finishes the present flow without transmitting the permission signal to the refill apparatus 100. Accordingly, the operation mode of the operation execution device 110 remains as the prohibited mode, and the state where the refill operation cannot be executed continues.

The authentication code for permitting the refill operation of the refill apparatus 100 may be periodically updated. The authentication step may be executed again in a specific case such as when communication between the control apparatus 200 and the management apparatus 300 is interrupted, or when a predetermined time elapses after the operation of the refill apparatus 100 stops. By doing so, functions of the refill system 10 in using the network N2 can be improved. For example, unauthorized access can be easily excluded.

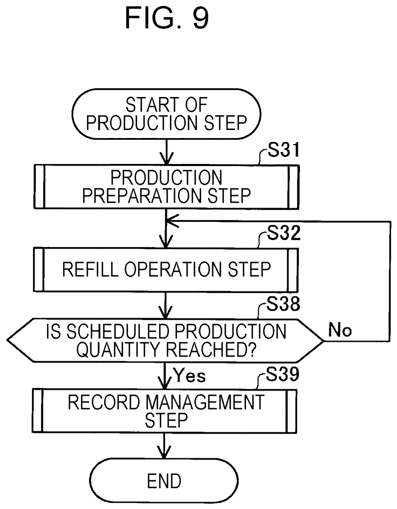

FIG. 9 is a flowchart showing details of the production step in the first embodiment. The production step starts when the operation of the refill apparatus 100 is permitted by the management apparatus 300. In the production step, first, a production preparation step in step S31 is executed. In the production preparation step, preparation for producing the refill product RP, such as acquisition of the production plan, is performed. After the production preparation step, a refill operation step in step S32 is executed. In the refill operation step, the refill operation is executed by the refill apparatus 100, and the refill product RP is produced. The operation status of the refill operation is shared with the management apparatus 300, as appropriate. The refill operation step is repeatedly executed until the number of produced refill products RP reaches the scheduled production quantity. When step S38 is "Yes", that is, when the number of produced refill products RP reaches the scheduled production quantity, a record management step in step S39 is executed. In the record management step, the operation status of the refill operation in the specific period is aggregated.

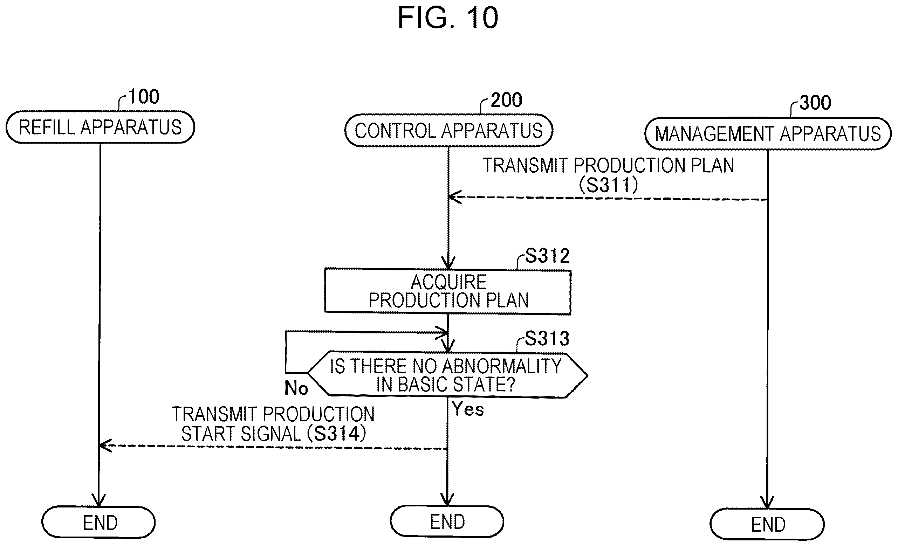

FIG. 10 is a flowchart showing details of the production preparation step in the first embodiment. For example, the production preparation step starts when the operation mode of the operation execution device 110 is set to the permission mode. In step S311, the plan transmission unit 312 of the management apparatus 300 transmits the production plan including the scheduled production quantity to the control apparatus 200. In step S312, the plan acquisition unit 212 of the control apparatus 200 acquires the production plan including the scheduled production quantity from the management apparatus 300. When step S313 results in "Yes", that is, when there is no abnormality in a basic state of the refill apparatus 100, step S314 is executed. The basic state of the refill apparatus 100 means, for example, whether or not error related to the refill operation is present. In step S314, the operation control unit 216 of the control apparatus 200 transmits a production start signal for starting to produce the refill product RP to the refill apparatus 100. An operation of checking the basic state may be automatically performed by the refill system 10 or manually performed by the partner business operator PA.

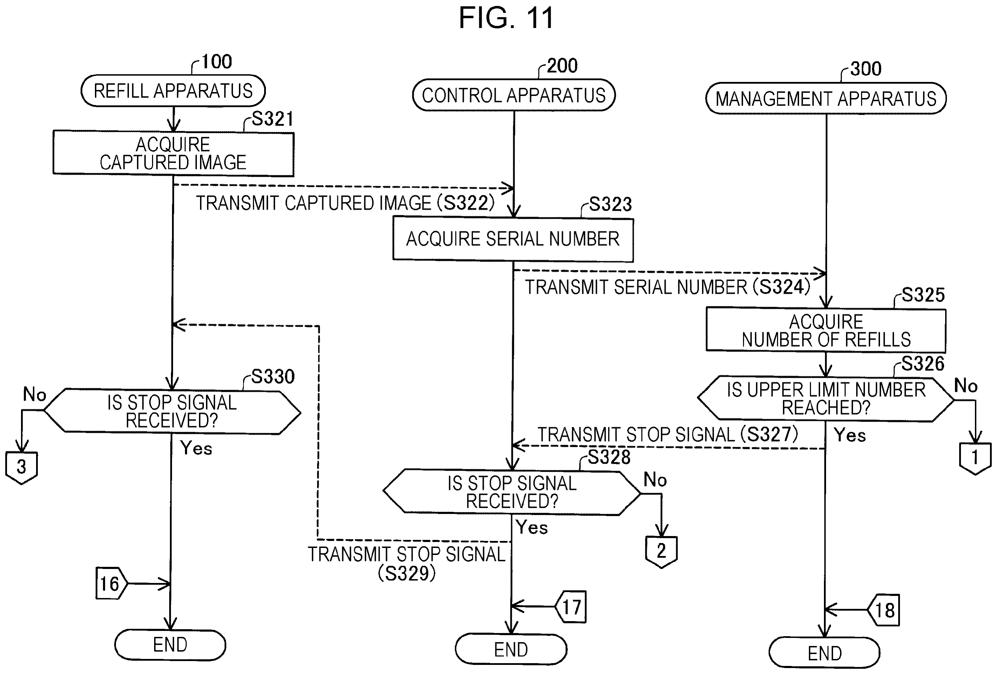

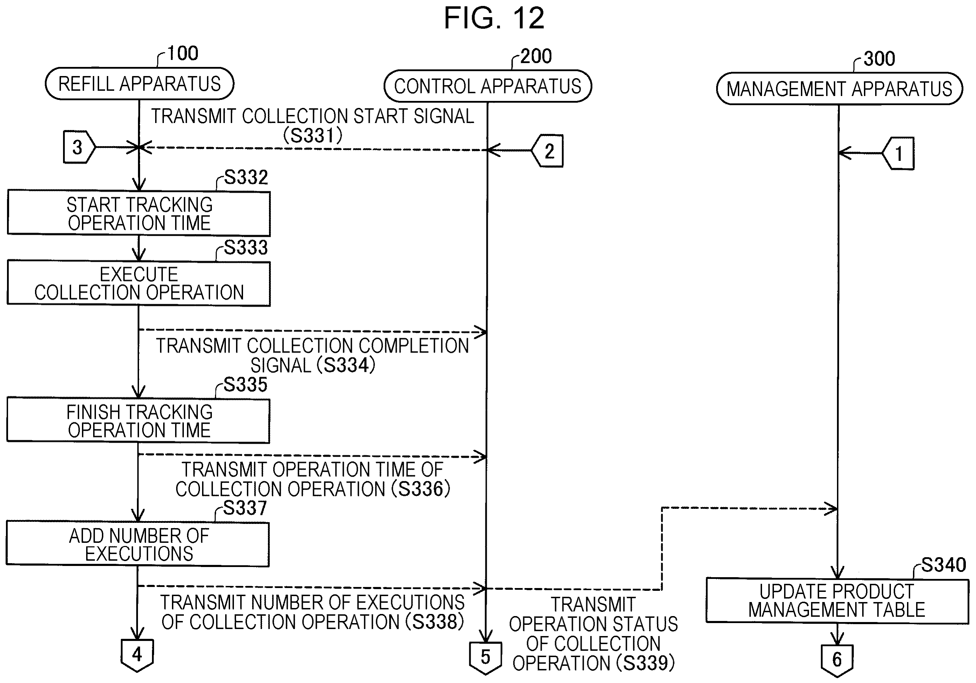

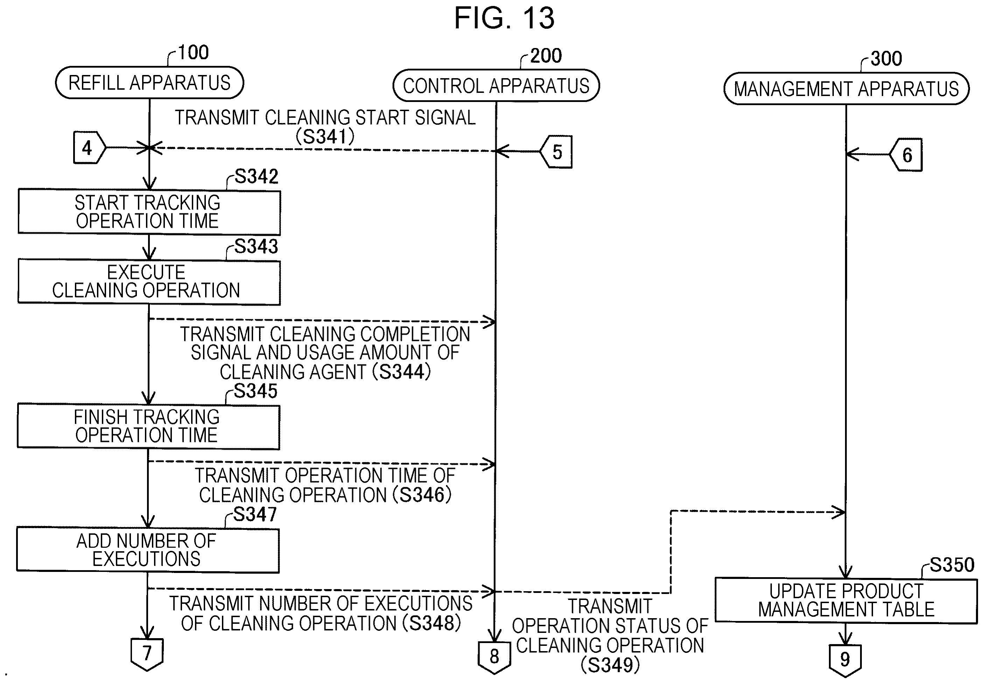

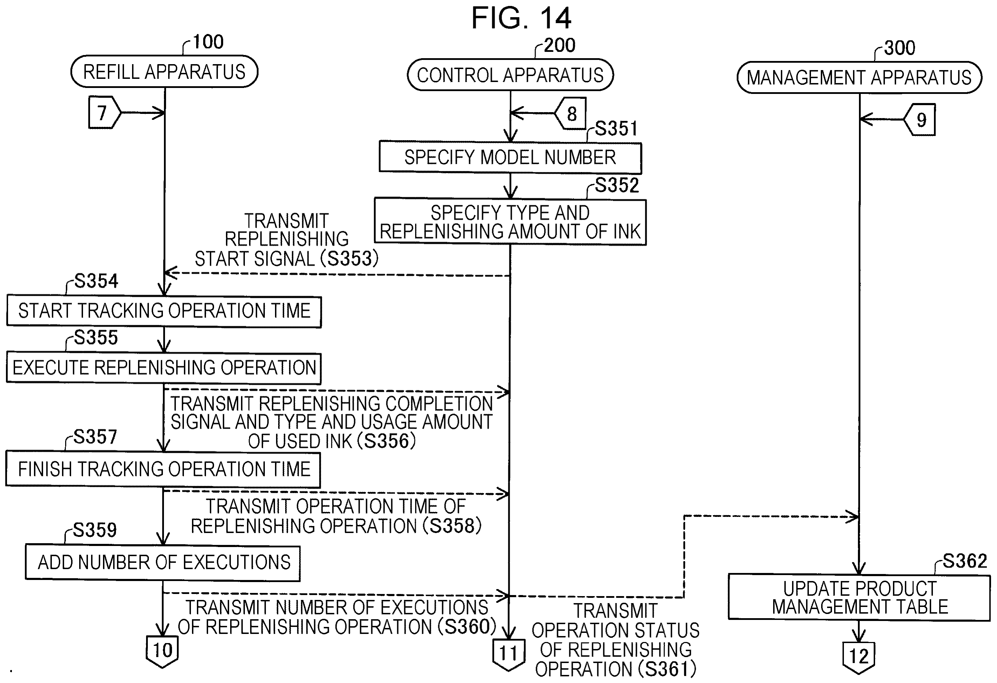

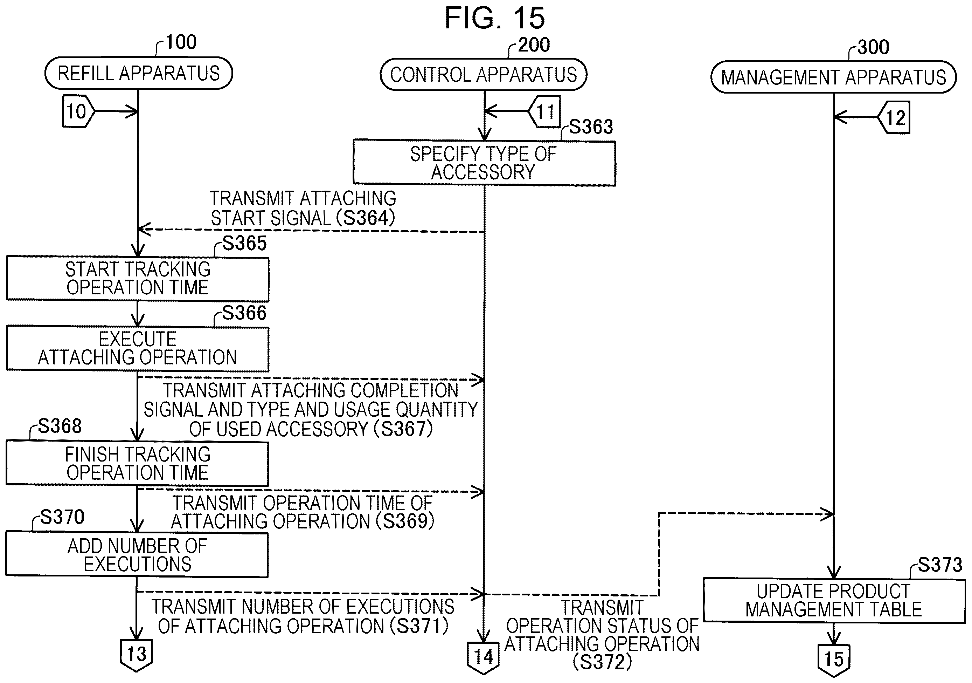

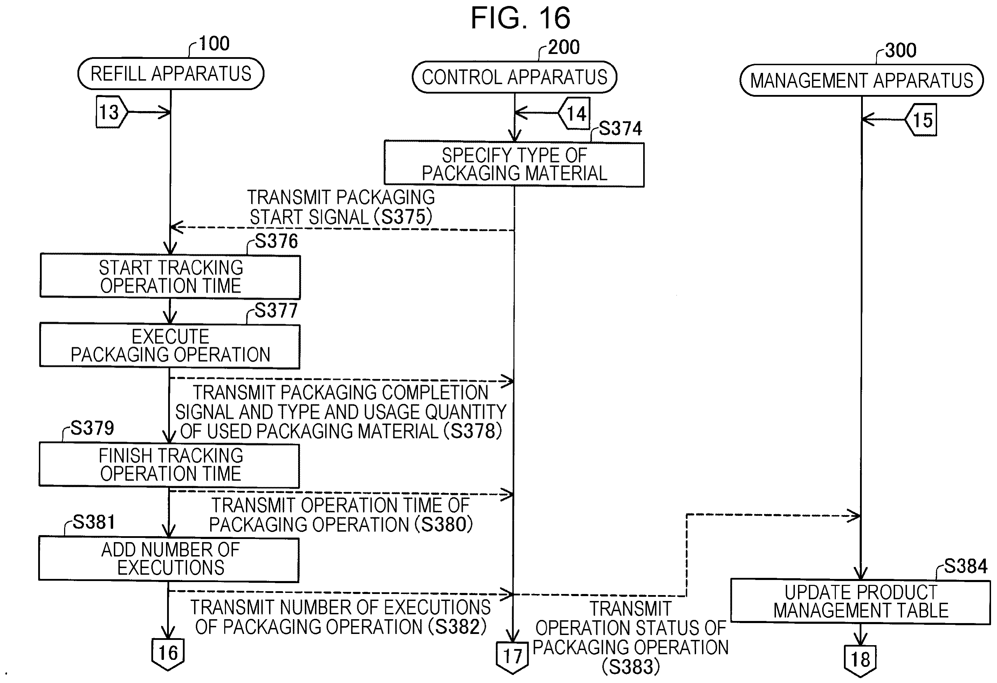

FIG. 11 is a first flowchart showing details of the refill operation step in the first embodiment. FIG. 12 is a second flowchart showing details of the refill operation step in the first embodiment. FIG. 13 is a third flowchart showing details of the refill operation step in the first embodiment. FIG. 14 is a fourth flowchart showing details of the refill operation step in the first embodiment. FIG. 15 is a fifth flowchart showing details of the refill operation step in the first embodiment. FIG. 16 is a sixth flowchart showing details of the refill operation step in the first embodiment. For example, the refill operation step starts when the refill apparatus 100 receives the production start signal from the control apparatus 200. The examples shown in FIGS. 11 to 16 illustrate a case where the refill product RP is produced by executing the collection operation, the cleaning operation, the replenishing operation, the attaching operation, and the packaging operation in this order via the refill apparatus 100.

As shown in FIG. 11, in step S321, the reading device 120 of the refill apparatus 100 images a label attached to or printed on the ink storage container IS set in the refill apparatus 100. Accordingly, the reading device 120 acquires the captured image including the code storing a serial number of the ink storage container IS. This step may include exterior inspection for inspecting a state of the ink storage container IS, that is, whether or not the ink storage container IS has an exterior without a quality issue even when the ink storage container IS is sold in the market as the refill product RP. In step S322, the reading device 120 transmits the acquired captured image to the control apparatus 200. In step S323, the identification information acquisition unit 213 of the control apparatus 200 acquires the serial number of the ink storage container IS set in the refill apparatus 100 by decoding the code in the captured image. In step S324, the identification information acquisition unit 213 transmits the acquired serial number to the management apparatus 300. In step S325, the record management unit 314 of the management apparatus 300 acquires the number of refills corresponding to the serial number acquired from the control apparatus 200 with reference to the product management table TP stored in the record storage unit 335.

When step S326 results in "Yes", that is, when the acquired number of refills reaches a predetermined upper limit number, step S327 is executed. In step S327, the record management unit 314 transmits a stop signal for stopping the refill operation for the ink storage container IS set in the refill apparatus 100 to the control apparatus 200, and finishes the present flow. When step S328 results in "Yes", that is, when the control apparatus 200 receives the stop signal within a predetermined time after transmitting the serial number, step S329 is executed. In step S329, the operation control unit 216 of the control apparatus 200 transmits a stop signal for stopping the refill operation for the ink storage container IS set in the refill apparatus 100 to the refill apparatus 100, and finishes the present flow. When step S330 results in "Yes", that is, when the refill apparatus 100 receives the stop signal, the refill apparatus 100 finishes the present flow without driving the operation execution device 110. The purpose of this operation is to maintain quality of the refill product RP.

When step S326 results in "No", that is, when the acquired number of refills does not reach the upper limit number, step S328 results in "No". When step S328 results in "No", that is, when the control apparatus 200 does not receive the stop signal within the predetermined time after transmitting the serial number, step S331 shown in FIG. 12 is executed. In step S331, the operation control unit 216 of the control apparatus 200 transmits a collection start signal for starting the collection operation to the refill apparatus 100. Here, collection means collection of the ink IN remaining in the ink storage container IS. The timer 132 of the refill apparatus 100 that has received the collection start signal starts tracking an operation time of the collection operation in step S332. The operation execution device 110 of the refill apparatus 100 that has received the collection start signal executes the collection operation in step S333. In the collection operation, for example, the operation execution device 110 opens a valve that switches communication between the inside and the outside of the ink storage container IS, to discharge the ink IN remaining in the ink storage container IS. The operation execution device 110 collects the ink IN discharged from the ink storage container IS. When the collection operation is completed, the operation execution device 110 transmits a collection completion signal indicating the completion of the collection operation to the control apparatus 200 in step S334. When the collection operation is completed, the timer 132 finishes tracking the operation time of the collection operation in step S335. In step S336, the timer 132 transmits the operation time of the collection operation to the control apparatus 200. When the collection operation is completed, the counter 131 of the refill apparatus 100 adds one to the number of executions of the collection operation in step S337. This addition may be performed for only the genuine product from which the product identification information can be read. In step S338, the counter 131 transmits the number of executions of the collection operation to the control apparatus 200. In step S339, the operation status transmission unit 217 of the control apparatus 200 sets the number of executions and the operation time of the collection operation as operation status of the collection operation, and transmits the operation status of the collection operation to the management apparatus 300. In step S340, the record management unit 314 of the management apparatus 300 that has acquired the operation status of the collection operation stores the operation status of the collection operation in the product management table TP stored in the record storage unit 335. Accordingly, the record management unit 314 updates the product management table TP.

As shown in FIG. 13, in step S341, the operation control unit 216 of the control apparatus 200 transmits a cleaning start signal for starting the cleaning operation to the refill apparatus 100. The timer 132 of the refill apparatus 100 that has received the cleaning start signal starts tracking an operation time of the cleaning operation in step S342. The operation execution device 110 of the refill apparatus 100 that has received the cleaning start signal executes the cleaning operation in step S343. In the cleaning operation, the operation execution device 110 opens the valve of the ink storage container IS to eject the cleaning agent DG to the inside of the ink storage container IS from the valve. The operation execution device 110 cleans the inside of the ink storage container IS by discharging the ejected cleaning agent DG from the valve. When the cleaning operation is completed, the operation execution device 110 transmits a cleaning completion signal indicating the completion of the cleaning operation to the control apparatus 200 in step S344 together with the usage amount of the cleaning agent DG. When the cleaning operation is completed, the timer 132 finishes tracking the operation time of the cleaning operation in step S345. In step S346, the timer 132 transmits the operation time of the cleaning operation to the control apparatus 200. When the cleaning operation is completed, the counter 131 of the refill apparatus 100 adds one to the number of executions of the cleaning operation in step S347. This addition may be performed for only the genuine product. In step S348, the counter 131 transmits the number of executions of the cleaning operation to the control apparatus 200. In step S349, the operation status transmission unit 217 of the control apparatus 200 sets the number of executions and the operation time of the cleaning operation and the usage amount of the cleaning agent DG as the operation status of the cleaning operation, and transmits the operation status of the cleaning operation to the management apparatus 300. In step S350, the record management unit 314 of the management apparatus 300 that has acquired the operation status of the cleaning operation stores the operation status of the cleaning operation in the product management table TP stored in the record storage unit 335. Accordingly, the record management unit 314 updates the product management table TP.

As shown in FIG. 14, in step S351, the type specifying unit 214 of the control apparatus 200 specifies the model number of the ink storage container IS corresponding to the serial number of the ink storage container IS set in the refill apparatus 100 with reference to the model number table stored in the type storage unit 232. In step S352, the member specifying unit 215 of the control apparatus 200 specifies the type and the replenishing amount of the ink IN corresponding to the model number of the ink storage container IS set in the refill apparatus 100 with reference to the member table stored in the member storage unit 233. In principle, these steps are operations for the genuine product of the own company. However, the genuine product of the other company may also be specified by signing the agreement with the other company. In step S353, the operation control unit 216 of the control apparatus 200 transmits a replenishing start signal for starting the replenishing operation to the refill apparatus 100. The timer 132 of the refill apparatus 100 that has received the replenishing start signal starts tracking an operation time of the replenishing operation in step S354. The operation execution device 110 of the refill apparatus 100 that has received the replenishing start signal executes the replenishing operation in step S355. In the replenishing operation, the operation execution device 110 opens the valve of the ink storage container IS to fill the ink storage container IS with the type of the ink IN specified by the member specifying unit 215 by the replenishing amount specified by the member specifying unit 215. When the replenishing operation is completed, the operation execution device 110 transmits a replenishing completion signal indicating the completion of the replenishing operation to the control apparatus 200 in step S356 together with the type and the usage amount of the ink IN used in the replenishing operation. When the replenishing operation is completed, the timer 132 finishes tracking the operation time of the replenishing operation in step S357. In step S358, the timer 132 transmits the operation time of the replenishing operation to the control apparatus 200. When the replenishing operation is completed, the counter 131 of the refill apparatus 100 adds one to the number of executions of the replenishing operation in step S359. This addition may be performed for only the genuine product. In step S360, the counter 131 transmits the number of executions of the replenishing operation to the control apparatus 200. In step S361, the operation status transmission unit 217 of the control apparatus 200 sets the number of executions and the operation time of the replenishing operation and the type and the usage amount of the ink IN used in the replenishing operation as operation status of the replenishing operation, and transmits the operation status of the replenishing operation to the management apparatus 300. In step S362, the record management unit 314 of the management apparatus 300 that has acquired the operation status of the replenishing operation stores the operation status of the replenishing operation in the product management table TP stored in the record storage unit 335. Accordingly, the record management unit 314 updates the product management table TP.

As shown in FIG. 15, in step S363, the member specifying unit 215 of the control apparatus 200 specifies the type of the accessory AS corresponding to the model number of the ink storage container IS set in the refill apparatus 100 with reference to the member table stored in the member storage unit 233. In principle, this specification is performed for the genuine product of the own company. In step S364, the operation control unit 216 of the control apparatus 200 transmits an attaching start signal for starting the attaching operation to the refill apparatus 100. The attaching operation may include an operation of detaching the accessory AS of the used ink storage container IS for replacement. The timer 132 of the refill apparatus 100 that has received the attaching start signal starts tracking an operation time of the attaching operation in step S365. The operation execution device 110 of the refill apparatus 100 that has received the attaching start signal executes the attaching operation in step S366. In the attaching operation, the operation execution device 110 attaches the accessory AS of the type specified by the member specifying unit 215 to a predetermined attaching position. When the attaching operation is completed, the operation execution device 110 transmits an attaching completion signal indicating the completion of the attaching operation to the control apparatus 200 in step S367 together with the type and a usage quantity of the accessory AS used in the attaching operation. When the attaching operation is completed, the timer 132 finishes tracking the operation time of the attaching operation in step S368. In step S369, the timer 132 transmits the operation time of the attaching operation to the control apparatus 200. When the attaching operation is completed, the counter 131 of the refill apparatus 100 adds one to the number of executions of the attaching operation in step S370. In step S371, the counter 131 transmits the number of executions of the attaching operation to the control apparatus 200. In step S372, the operation status transmission unit 217 of the control apparatus 200 sets the number of executions and the operation time of the attaching operation and the type and the usage quantity of the accessory AS used in the attaching operation as the operation status of the attaching operation, and transmits the operation status of the attaching operation to the management apparatus 300. In step S373, the record management unit 314 of the management apparatus 300 that has acquired the operation status of the attaching operation stores the operation status of the attaching operation in the product management table TP stored in the record storage unit 335. Accordingly, the record management unit 314 updates the product management table TP. The attaching operation may be executed only when a specific condition corresponding to the degree of deterioration, a period of continuous use, and the like of the accessory AS is satisfied.

As shown in FIG. 16, in step S374, the member specifying unit 215 of the control apparatus 200 specifies the type of the packaging material PM corresponding to the model number of the ink storage container IS set in the refill apparatus 100 with reference to the member table stored in the member storage unit 233. In principle, this specification is performed for the genuine product of the own company. In step S375, the operation control unit 216 of the control apparatus 200 transmits a packaging start signal for starting the packaging operation to the refill apparatus 100. The timer 132 of the refill apparatus 100 that has received the packaging start signal starts tracking an operation time of the packaging operation in step S376. The operation execution device 110 of the refill apparatus 100 that has received the packaging start signal executes the packaging operation in step S377. In the packaging operation, the operation execution device 110 packages the ink storage container IS using a predetermined packaging method using the packaging material PM of the type specified by the member specifying unit 215. The operation execution device 110, for example, puts the ink storage container IS in a bag as the packaging material PM, seals the bag, and then packages the ink storage container IS in the sealed bag in an outer box as the packaging material PM. When the packaging operation is completed, the operation execution device 110 transmits a packaging completion signal indicating the completion of the packaging operation to the control apparatus 200 in step S378 together with the type and a usage quantity of the packaging material PM used in the packaging operation. When the packaging operation is completed, the timer 132 finishes tracking the operation time of the packaging operation in step S379. In step S380, the timer 132 transmits the operation time of the packaging operation to the control apparatus 200. When the packaging operation is completed, the counter 131 of the refill apparatus 100 adds one to the number of executions of the packaging operation in step S381. In step S382, the counter 131 transmits the number of executions of the packaging operation to the control apparatus 200. In step S383, the operation status transmission unit 217 of the control apparatus 200 sets the number of executions and the operation time of the packaging operation and the type and the usage quantity of the packaging material PM used in the packaging operation as the operation status of the packaging operation, and transmits the operation status of the packaging operation to the management apparatus 300. In step S384, the record management unit 314 of the management apparatus 300 that has acquired the operation status of the packaging operation stores the operation status of the packaging operation in the product management table TP stored in the record storage unit 335. The record management unit 314 adds one to the number of refills corresponding to the serial number of the ink storage container IS remanufactured as the refill product RP. Accordingly, the record management unit 314 updates the product management table TP.

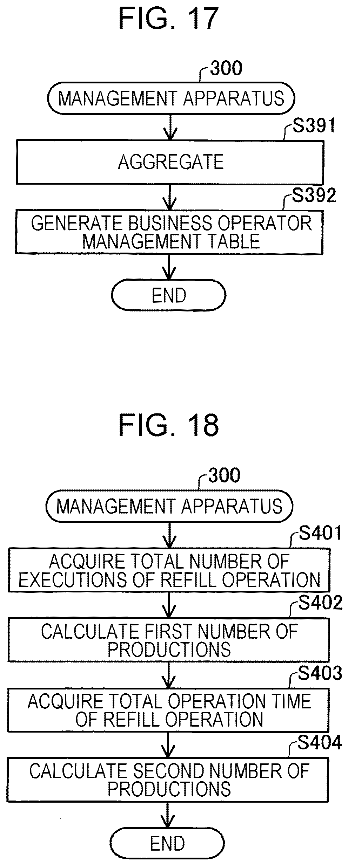

FIG. 17 is a flowchart showing details of the record management step in the first embodiment. For example, the record management step starts when the number of produced refill products RP reaches the scheduled production quantity. In step S391, the record management unit 314 of the management apparatus 300 aggregates the number of executions and the operation time of the refill operation and the usage quantity of the member PT with reference to the product management table TP stored in the record storage unit 335. In step S392, the record management unit 314 generates the business operator management table TV by segmenting an aggregation result for each specific period.

FIG. 18 is a flowchart showing details of the number calculation step in the first embodiment. For example, the number calculation step starts when the production step is finished. In step S401, the first number calculation unit 315 of the management apparatus 300 acquires the total number of executions of the refill operation in the specific period with reference to the business operator management table TV stored in the record storage unit 335. In step S402, the first number calculation unit 315 calculates the number of produced refill products RP using the total number of executions of the refill operation in the specific period and sets the calculated number as the first number of produced products. When the execution of the refill operation targets only the genuine product of the own company, the first number of produced products is supposed to be equal to the number of produced genuine products. In step S403, the second number calculation unit 316 of the management apparatus 300 acquires the total operation time of the refill operation in the specific period with reference to the business operator management table TV stored in the record storage unit 335. In step S404, the second number calculation unit 316 calculates the number of generations of the refill product RP using the total operation time of the refill operation in the specific period and sets the calculated number as the second number of produced products. For example, when the whole operation time is spent on the refill product RP of the genuine product of the own company, the calculated number may be set as the second number of cleaned products.

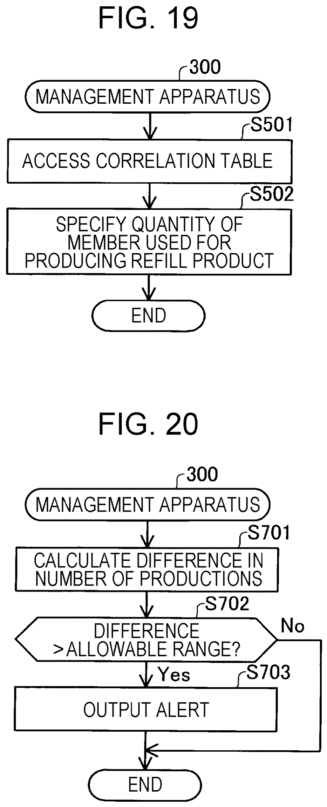

FIG. 19 is a flowchart showing details of the quantity specifying step in the first embodiment. For example, the quantity specifying step starts when the production step is finished. In step S501, the quantity specifying unit 317 of the management apparatus 300 accesses the correlation table stored in the necessary quantity storage unit 334. In step S502, the quantity specifying unit 317 acquires the necessary member quantity corresponding to the operation status of the refill operation for each type of the member PT in the correlation table. Accordingly, the quantity specifying unit 317 specifies the quantity of the member PT used for producing the refill product RP for each type of the member PT.

FIG. 20 is a flowchart showing details of the alert output step in the first embodiment. For example, the alert output step starts when both of the number calculation step and the quantity specifying step are finished. In step S701, the alert output unit 318 of the management apparatus 300 calculates the difference between the first number of produced products and the second number of produced products. When step S702 results in "Yes", that is, when the difference between the first number of produced products and the second number of produced products exceeds the allowable range, it is determined that there is abnormality in the refill system 10, and step S703 is executed. In step S703, the alert output unit 318 determines that there is a probability that unauthorized activity such as the refill of the genuine product of the other company or the compatible product or the refill of the imitation product against the intention of the production business operator MA is performed or a trouble has occurred in the partner business operator PA, and outputs the alert via the notification device 370. The alert output by the notification device 370 is, for example, text information indicating that abnormality has occurred. When step S702 results in "No", that is, when the difference between the first number of produced products and the second number of produced products falls within the allowable range, the alert output unit 318 performs the following process. In this case, the alert output unit 318 determines that the current state is normal, and finishes the present flow without outputting the alert.

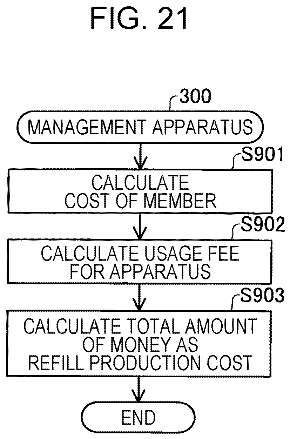

FIG. 21 is a flowchart showing details of the cost calculation step in the first embodiment. For example, the cost calculation step starts when both of the number calculation step and the quantity specifying step are finished. FIG. 21 illustrates a case where the cost calculation unit 319 calculates the refill production cost RC including the cost of the member PT supplied from the production business operator MA to the partner business operator PA and the usage fee of the apparatuses 100 and 200 lent from the production business operator MA to the partner business operator PA. In step S901, the cost calculation unit 319 of the management apparatus 300 calculates the cost of the member PT supplied from the production business operator MA to the partner business operator PA by substituting the usage quantity of the member PT specified in the quantity specifying step in a predetermined calculation formula. In step S902, the cost calculation unit 319 calculates the usage fee of the apparatuses 100 and 200 lent from the production business operator MA to the partner business operator PA by substituting the number of produced refill products RP calculated in the number calculation step in a predetermined calculation formula. In step S903, the cost calculation unit 319 calculates the total amount of money including the cost of the member PT and the usage fee of the apparatuses 100 and 200 as the refill production cost RC.

According to the first embodiment, when the apparatus identification information received from the control apparatus 200 lent to the partner business operator PA matches the apparatus identification information stored in the management apparatus 300 owned by the production business operator MA, the following process is performed. In this case, the refill operation of the refill apparatus 100 lent to the partner business operator PA is permitted. In such an aspect, the production business operator MA can cause the partner business operator PA to produce the refill product RP only when the partner business operator PA has signed the partnership agreement with the production business operator MA. Thus, the production business operator MA can cause the partner business operator PA to produce the refill product RP under management of the production business operator MA and distribute the refill product RP again in the market using the networks N1 and N2.

According to the first embodiment, in the refill system 10, the partner business operator PA produces the refill product RP via the refill apparatus 100 lent from the production business operator MA using the same manufacturing method as that of the production business operator MA using the member PT supplied from the production business operator MA. In such an aspect, the production business operator MA can cause the partner business operator PA to produce the refill product RP of quality equal to that of the product NP produced by the production business operator MA.

According to the first embodiment, in the refill system 10, the management apparatus 300 owned by the production business operator MA can manage the operation of the refill apparatus 100 by communicating with the control apparatus 200 lent to the partner business operator PA via the network N2. In such an aspect, even when the partner business operator PA at a remote location such as an overseas location produces the refill product RP, the production business operator MA can easily manage the production of the refill product RP by the partner business operator PA. Accordingly, for example, the refill system 10 can be widely used in areas other than a refill production site of the production business operator MA in a limited area.

According to the first embodiment, in the refill system 10, the management apparatus 300 owned by the production business operator MA can communicate with the printing apparatus 900 owned by the user U and the control apparatus 200 lent to the partner business operator PA via the networks N1 and N2. Accordingly, the production business operator MA can acquire various types of information such as the usage status of the printing apparatus 900 from the user U or acquire various types of information such as the collection status of the ink storage container IS from the partner business operator PA. In such an aspect, the production business operator MA can determine the provision quantity and the provision time of the refill product RP to be provided to the user U from the partner business operator PA and create the production plan for the refill product RP based on the various types of information shared from the user U and the partner business operator PA. Accordingly, the production business operator MA can supply the member PT of an appropriate quantity to the partner business operator PA at an appropriate time in accordance with the production plan. In addition, the partner business operator PA can produce the refill product RP in accordance with the production plan acquired via the network N2 and provide the refill product RP in the provision quantity determined by the production business operator MA to the user U at the provision time determined by the production business operator MA. Accordingly, the partner business operator PA can provide an appropriate number of refill products RP to the user U at an appropriate time.

According to the first embodiment, in the refill system 10, the products NP and RP to which the product identification information is assigned are distributed in the market. In such an aspect, the type of the ink storage container IS can be specified, or the configuration of the member PT corresponding to the type of the ink storage container IS can be specified using the product identification information of the ink storage container IS set in the refill apparatus 100.

According to the first embodiment, in the record storage unit 335 of the management apparatus 300, the product identification information is stored in association with the number of refills of the ink storage container IS. In such an aspect, when the number of refills of the ink storage container IS reaches the upper limit number, the management apparatus 300 can stop the refill operation of the refill apparatus 100 by, for example, transmitting the stop signal to the control apparatus 200. Accordingly, a probability that the number of reuses of the ink storage container IS exceeds the upper limit number can be reduced. When the number of refills of the ink storage container IS used for producing the refill product RP reaches the upper limit number, the management apparatus 300 may output the alert. Even in such an aspect, the probability that the number of reuses of the ink storage container IS exceeds the upper limit number can be reduced.

The refill system 10 may add one to the number of refills after the packaging operation that is the last operation of the plurality of operations included in the refill operation is completed. In such an aspect, the addition is not performed for the number of refills of the ink storage container IS that is ejected from a production line in the middle of production by stopping the refill operation. Thus, even when the ink storage container IS is ejected from the production line in the middle of production, such as when the ink storage container IS of a cleaning level less than a predetermined level is ejected from the production line, the number of refills of the ink storage container IS can be more accurately managed. In this configuration, the number of refills needs to be associated with the serial number of each of the products NP and RP.

According to the first embodiment, the refill system 10 can classify the used ink storage container IS as any one of the genuine product of the own company, the genuine product of the other company, or the compatible product. In such an aspect, the production business operator MA can change the process in producing the refill product RP in accordance with the classification of the ink storage container IS. For example, when the refill operation is scheduled to be executed on the compatible product, the management apparatus 300 may stop the refill operation for the compatible product by, for example, transmitting the stop signal to the control apparatus 200. By doing so, the production business operator MA can prevent the refill product RP that is more likely to deteriorate in quality than the product NP produced by the production business operator MA, from being distributed in the market. When the refill operation has already been executed on the compatible product, the management apparatus 300 may perform the following process. In this case, the management apparatus 300 may stop shipping of the refill product RP produced using the compatible product by transmitting a shipping stop signal for stopping the shipping of the refill product RP produced using the compatible product to the control apparatus 200. By doing so, the production business operator MA can prevent the refill product RP that is more likely to deteriorate in quality than the product NP produced by the production business operator MA, from being distributed in the market. When the refill operation is executed on the genuine product of the other company, the management apparatus 300 may calculate the refill production cost RC including an additional cost corresponding to the operation status of the refill operation for the genuine product of the other company. By doing so, the production business operator MA can offset a cost related to the refill operation for the genuine product of the other company by receiving the additional cost from the partner business operator PA while implementing environmental protection by continuing the production of the refill product RP without interruption.

According to the first embodiment, in the refill system 10, the operation status of the refill operation including the number of executions of the refill operation and the operation time of the refill operation is monitored in the refill apparatus 100 and is transmitted to the management apparatus 300 via the control apparatus 200. In such an aspect, the management apparatus 300 can mechanically calculate the number of produced refill products RP using the operation status of the refill operation. Accordingly, the production business operator MA can easily identify the production record of the refill product RP such as the number of produced refill products RP from minimum necessary information such as the operation status of the refill operation.

According to the first embodiment, the first number of produced products is the number of produced refill products RP calculated using the number of executions of the refill operation in the specific period for the genuine product of the own company. The second number of produced products is the number of produced refill products RP calculated using the operation time of the refill operation in the same period as that for calculating the first number of produced products for the ink storage container IS including the genuine product of the other company and the compatible product. Thus, when the refill product RP is produced, there may be a difference between the first number of produced products and the second number of produced products when there is a probability that unauthorized activity is performed or a trouble has occurred in the partner business operator PA. When the difference between the first number of produced products and the second number of produced products exceeds the allowable range, the management apparatus 300 can automatically output the alert. In such an aspect, the production business operator MA can quickly identify the probability that unauthorized activity is performed or a trouble has occurred in the partner business operator PA. This can be useful in the process corresponding to the classification of the ink storage container IS, such as stopping the refill operation for the compatible product, stopping the shipping of the refill product RP using the compatible product, and calculating the additional cost corresponding to the execution of the refill operation on the genuine product of the other company.

According to the first embodiment, in the refill system 10, the operation status of the refill operation including at least one of the number of executions of the refill operation and the operation time of the refill operation is monitored in the refill apparatus 100 and is transmitted to the management apparatus 300 via the control apparatus 200. The management apparatus 300 stores the necessary member quantity in the specific period. In such an aspect, the management apparatus 300 can mechanically specify the quantity of the member PT used for producing the refill product RP based on the operation status of the refill operation and the necessary member quantity. Accordingly, the production business operator MA can quickly identify the quantity of the member PT used for producing the refill product RP without waiting for a report from the partner business operator PA. Thus, the production business operator MA can supply the member PT of a more appropriate quantity to the partner business operator PA at a more appropriate time.

According to the first embodiment, in the refill system 10, the operation status of the refill operation including at least one of the number of executions of the refill operation and the operation time of the refill operation is monitored in the refill apparatus 100 and is transmitted to the management apparatus 300 via the control apparatus 200. In such an aspect, the management apparatus 300 can calculate the refill production cost RC in the specific period based on the specific quantity correlated with the operation status of the refill operation. Accordingly, the production business operator MA can earn revenue by sending an invoice for the calculated refill production cost RC to the partner business operator PA and receiving the refill production cost RC from the partner business operator PA, and implement billing corresponding to usage status of the apparatuses 100 and 200 in the partner business operator PA. In particular, from a viewpoint of promoting spread of environmental measures throughout the society, by not excluding the refill of the genuine product of the other company other than the own company and the refill of the compatible product in the refill system 10, and causing the partner business operator PA to pay the refill production cost RC related to those refills to the production business operator MA as the usage fee of the apparatuses described later, business for the refill product RP can continue widely.

According to the first embodiment, the partner business operator PA can lease or rent the refill apparatus 100 and the control apparatus 200 from the production business operator MA by paying the refill production cost RC including the usage fee of the apparatuses 100 and 200 to the production business operator MA. In such an aspect, the partner business operator PA can produce the refill product RP without the need for equipment investment for installing the refill apparatus 100 and the control apparatus 200. Furthermore, when the apparatuses 100 and 200 are also used for refilling the genuine product of the other company other than the own company and further refilling the compatible product, refill business can be more widely conducted by paying the refill production cost RC including a usage fee different from the usage fee for refilling the genuine product of the own company to the production business operator MA.

According to the first embodiment, the partner business operator PA can be supplied with the member PT to be used for producing the refill product RP from the production business operator MA by paying the refill production cost RC including the cost of the member PT to the production business operator MA. In such an aspect, the partner business operator PA does not need to prepare the member PT to be used for producing the refill product RP. Thus, the partner business operator PA can produce the refill product RP without the need for production equipment or materials for producing the member PT and a mold for molding the accessory AS.

According to the first embodiment, the partner business operator PA can produce the refill product RP using the brand logo, the patent, and the like of the production business operator MA and sell the refill product RP to the user U by paying the refill production cost RC including the license usage fee to the production business operator MA.

The refill system 10 only needs to have a function of permitting the refill operation of the refill apparatus 100 when the apparatus identification information received from the control apparatus 200 matches the apparatus identification information stored in the management apparatus 300, and may not essentially have other functions.

### B. Second Embodiment

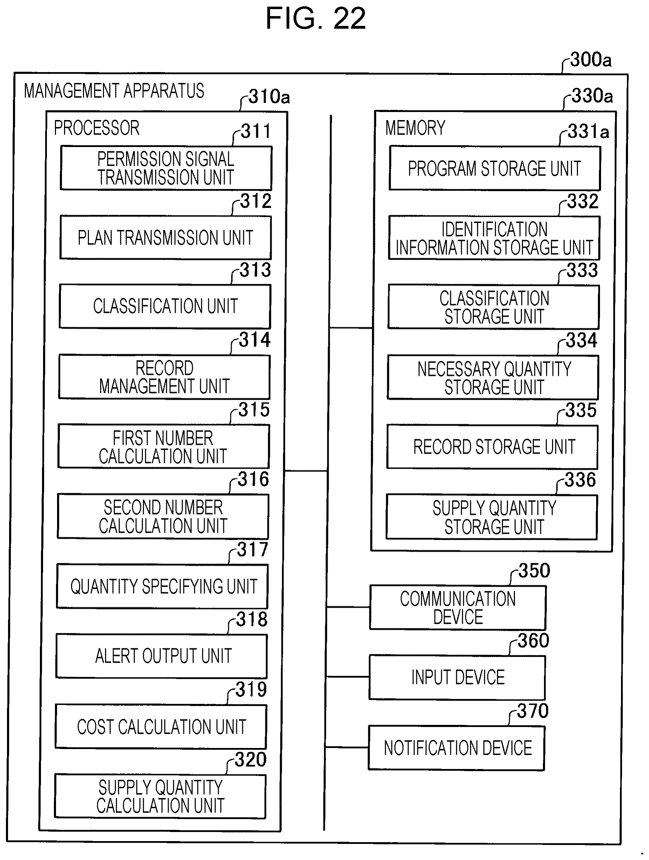

FIG. 22 is a block diagram showing a configuration of a management apparatus 300a in a second embodiment. In the present embodiment, a memory 330a of the management apparatus 300a further includes a supply quantity storage unit 336. The supply quantity storage unit 336 stores the quantity of the member PT supplied from the production business operator MA to the partner business operator PA. A processor 310a of the management apparatus 300a further functions as a supply quantity calculation unit 320 by executing a program stored in a program storage unit 331a of the memory 330a. The supply quantity calculation unit 320 calculates the quantity of the member PT to be newly supplied to the partner business operator PA based on the quantity of the member PT specified by the quantity specifying unit 317 and the supply quantity of the member PT stored in the supply quantity storage unit 336. Other configurations are the same as those in the first embodiment. The same configurations as those in the first embodiment will be designated by the same reference numerals and will not be described.

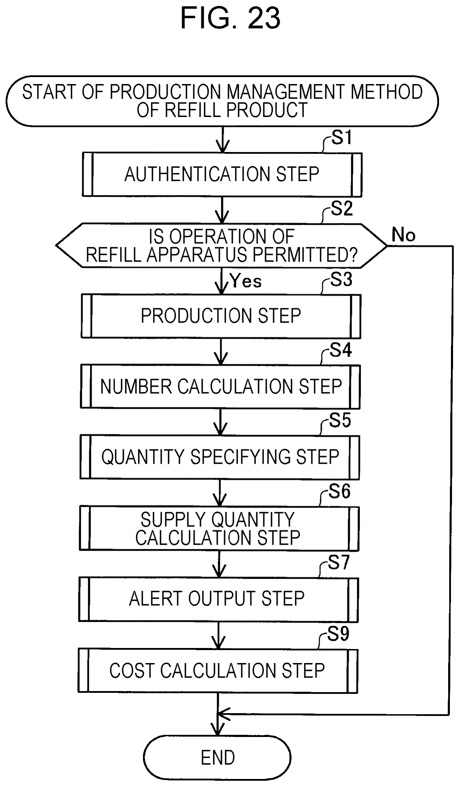

FIG. 23 is a flowchart showing a production management method of the refill product RP in the second embodiment. In the present embodiment, after the number calculation step and the quantity specifying step, a supply quantity calculation step in step S6 is executed. In the supply quantity calculation step, the quantity of the member PT to be newly supplied to the partner business operator PA is calculated.

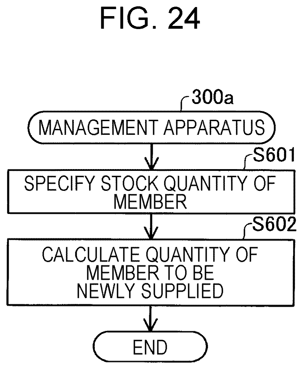

FIG. 24 is a flowchart showing details of the supply quantity calculation step in the second embodiment. For example, the supply quantity calculation step starts when both of the number calculation step and the quantity specifying step are finished. In step S601, the supply quantity calculation unit 320 of the management apparatus 300a subtracts the usage quantity of the member PT specified by the quantity specifying unit 317 from the supply quantity of the member PT stored in the supply quantity storage unit 336. Accordingly, the supply quantity calculation unit 320 specifies the stock quantity of the member PT at the end of a first period. In step S602, the supply quantity calculation unit 320 calculates a difference between the necessary member quantity corresponding to the production plan in a second period after the first period and the stock quantity of the member PT at the end of the first period as the quantity of the member PT to be newly supplied to the partner business operator PA.

According to the second embodiment, the quantity of the member PT to be newly supplied to the partner business operator PA can be calculated from minimum necessary information such as the operation status of the refill operation. That is, transmission and reception functions of the refill apparatus 100 can be minimized. Accordingly, since costs of the apparatuses 100 and 200 to be lent to the partner business operator PA can be reduced, a production cost of the refill product RP can be reduced. Furthermore, the production business operator MA can supply the member PT of an appropriate quantity to the partner business operator PA at an appropriate time. Thus, the production business operator MA can continuously operate recycling refill business.

### C. Third Embodiment

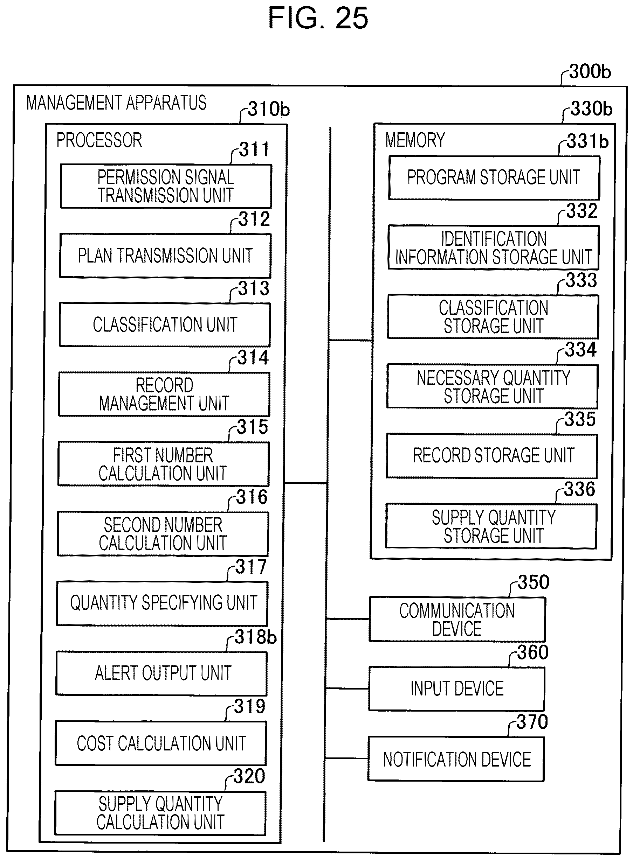

FIG. 25 is a block diagram showing a configuration of a management apparatus 300b in a third embodiment. In the present embodiment, a processor 310b of the management apparatus 300b functions as an alert output unit 318b by executing a program stored in a program storage unit 331b of a memory 330b. Other configurations are the same as those in the second embodiment. The same configurations as those in the second embodiment will be designated by the same reference numerals and will not be described.

When the refill product RP is produced without unauthorized activity or a trouble, the number of produced refill products RP has a positive correlation with the operation status of the refill operation. Thus, when unauthorized activity is performed or a trouble occurs in the partner business operator PA, there may be the following difference. In this case, there may be a difference between the number of produced refill products RP in the specific period calculated by the number calculation units 315 and 316 and the number of produced refill products RP in the specific period reported from the partner business operator PA via the input device 260 or the like. Furthermore, when the refill product RP is produced without unauthorized activity or a trouble, the usage quantity of the member PT in the specific period has a positive correlation with the operation status of the refill operation in the specific period. When the refill product RP is produced without unauthorized activity or a trouble, the stock quantity of the member PT in the specific period has a negative correlation with the operation status of the refill operation in the specific period. Accordingly, even when the genuine product of the own company is used for the ink storage container IS, there may be the following difference when the refill product RP is produced using another member different from the member PT supplied from the production business operator MA. In this case, there may be a difference between the usage quantity of the member PT in the specific period specified by the quantity specifying unit 317 and the usage quantity of the member PT in the specific period reported from the partner business operator PA to the production business operator MA via the input device 260 or the like. There may be a difference between the stock quantity of the member PT at the end of the specific period specified by the quantity specifying unit 317 and the stock quantity of the member PT in the specific period reported from the partner business operator PA to the production business operator MA via the input device 260 or the like. When there is a predetermined level of difference or more between the specific quantity calculated by each of the functional units 315 to 317 and 320 of the management apparatus 300b and the quantity reported from the partner business operator PA for any of the usage quantity or the stock quantity of the member PT or the number of produced refill products RP, there is a probability of the following. In this case, when the refill product RP is produced, there is a probability that unauthorized activity is performed or a trouble has occurred in the partner business operator PA. Therefore, in the present embodiment, when the difference between the specific quantity calculated by each of the functional units 315 to 317 and 320 of the management apparatus 300b and the quantity reported from the partner business operator PA exceeds an allowable range, the alert output unit 318b outputs an alert.

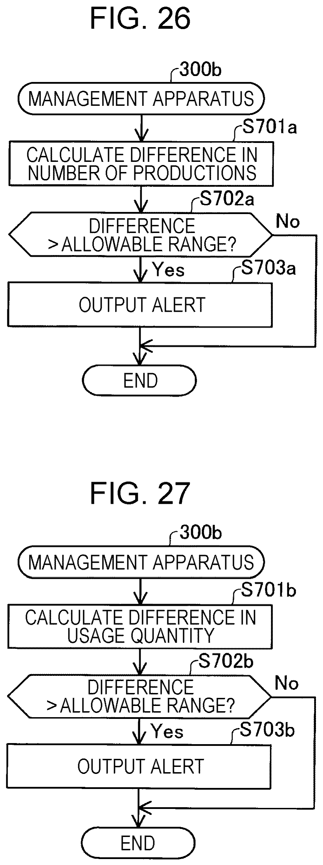

FIG. 26 is a flowchart showing a first example of the alert output step in the third embodiment. In step S701a, the alert output unit 318b of the management apparatus 300b executes the following process. The alert output unit 318b calculates the difference between the number of produced refill products RP in the specific period calculated by the number calculation units 315 and 316 and the number of produced refill products RP in the specific period reported from the partner business operator PA. When step S702a results in "Yes", that is, when the calculated difference exceeds the allowable range, it is determined that abnormality has occurred in the refill system 10, and step S703a is executed. In step S703a, the alert output unit 318b determines that there is a probability that unauthorized activity is performed or a trouble has occurred in the partner business operator PA, and outputs the alert via the notification device 370. When step S702a results in "No", that is, when the calculated difference falls within the allowable range, the alert output unit 318b performs the following process. In this case, the alert output unit 318b determines that the current state is normal, that is, the probability that unauthorized activity is performed or a trouble has occurred in the partner business operator PA is low, and finishes the present flow without outputting the alert.

FIG. 27 is a flowchart showing a second example of the alert output step in the third embodiment. In step S701b, the alert output unit 318b of the management apparatus 300b executes the following process. The alert output unit 318b calculates a difference between the usage quantity of the member PT in the specific period specified by the quantity specifying unit 317 and the usage quantity of the member PT in the specific period reported from the partner business operator PA to the production business operator MA. When step S702b results in "Yes", that is, when the calculated difference exceeds the allowable range, it is determined that abnormality has occurred in the refill system 10, and step S703b is executed. In step S703b, the alert output unit 318b determines that there is a probability that unauthorized activity is performed or a trouble has occurred in the partner business operator PA, and outputs the alert via the notification device 370. When step S702b results in "No", that is, when the calculated difference falls within the allowable range, the alert output unit 318b performs the following process. In this case, the alert output unit 318b determines that the current state is normal, that is, the probability that unauthorized activity is performed or a trouble has occurred in the partner business operator PA is low, and finishes the present flow without outputting the alert.

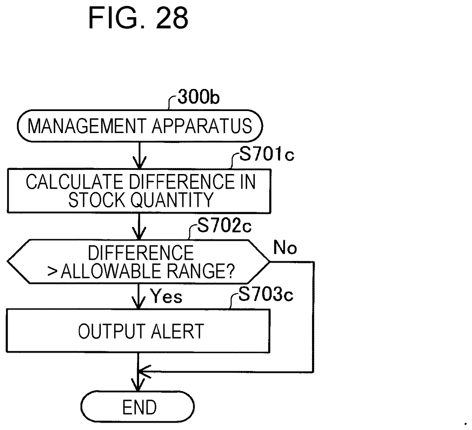

FIG. 28 is a flowchart showing a third example of the alert output step in the third embodiment. In step S701c, the alert output unit 318b of the management apparatus 300b executes the following process. The alert output unit 318b calculates a difference between the stock quantity of the member PT at the end of the specific period specified by the supply quantity calculation unit 320 and the stock quantity of the member PT at the end of the specific period reported from the partner business operator PA. When step S702c results in "Yes", that is, when the calculated difference exceeds the allowable range, it is determined that abnormality has occurred in the refill system 10, and step S703c is executed. In step S703c, the alert output unit 318b determines that there is a probability that unauthorized activity is performed or a trouble has occurred in the partner business operator PA, and outputs the alert via the notification device 370. When step S702c results in "No", that is, when the calculated difference falls within the allowable range, the alert output unit 318b performs the following process. In this case, the alert output unit 318b determines that the current state is normal, that is, the probability that unauthorized activity is performed or a trouble has occurred in the partner business operator PA is low, and finishes the present flow without outputting the alert.

According to the third embodiment, by comparing the quantity reported by the partner business operator PA with the specific quantity calculated by the management apparatus 300b, the management apparatus 300b can determine whether or not there is unauthorized activity or a trouble in the partner business operator PA, and output the alert.

### D. Fourth Embodiment

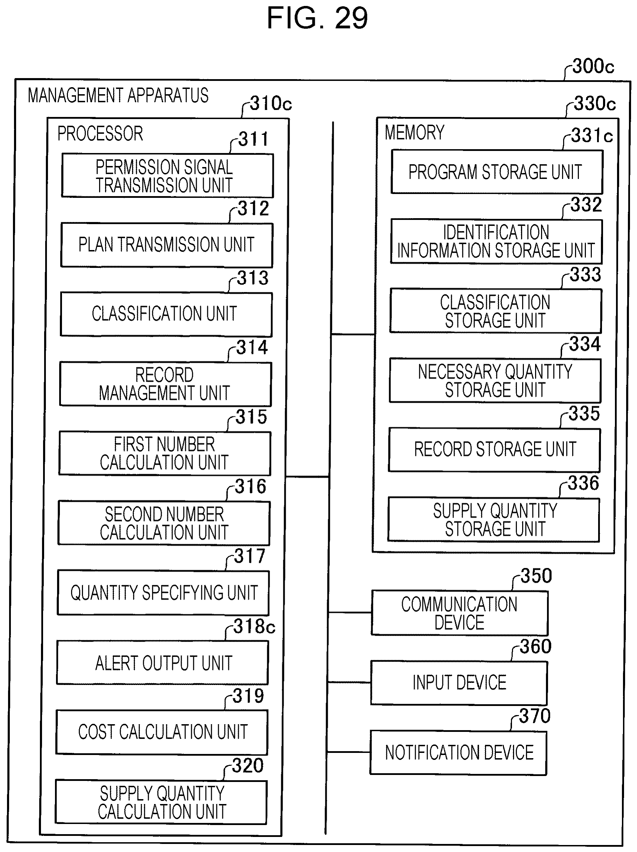

FIG. 29 is a block diagram showing a configuration of a management apparatus 300c in a fourth embodiment. In the present embodiment, a processor 310c of the management apparatus 300c functions as an alert output unit 318c by executing a program stored in a program storage unit 331c of a memory 330c. Other configurations are the same as those in the second embodiment. The same configurations as those in the second embodiment will be designated by the same reference numerals and will not be described.

The member PT used for producing the refill product RP is supplied from the production business operator MA to the partner business operator PA in accordance with the scheduled production quantity. The partner business operator PA produces the refill product RP corresponding in number to the scheduled production quantity. Thus, when the refill product RP is produced without unauthorized activity or a trouble, the usage quantity of the member PT in the specific period substantially matches the supply quantity of the member PT supplied from the production business operator MA to the partner business operator PA. Thus, when unauthorized activity is performed or a trouble occurs in the partner business operator PA, there may be the following difference. In this case, there may be a difference between the usage quantity of the member PT in the specific period specified by the quantity specifying unit 317 and the supply quantity of the member PT supplied from the production business operator MA to the partner business operator PA in accordance with the scheduled production quantity. Therefore, in the present embodiment, when the difference between the usage quantity of the member PT in the specific period specified by the quantity specifying unit 317 and the supply quantity of the member PT supplied to the partner business operator PA for production in the specific period exceeds an allowable range, the alert output unit 318c outputs an alert.

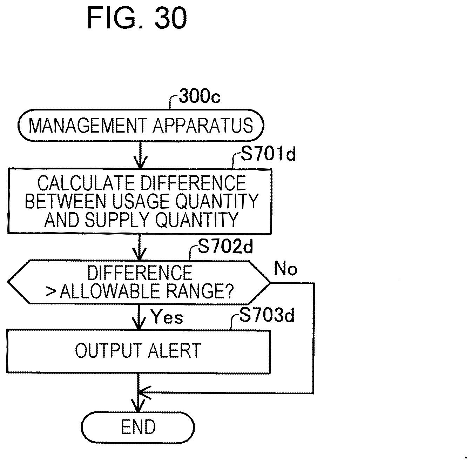

FIG. 30 is a flowchart showing details of the alert output step in the fourth embodiment. In step S701d, the alert output unit 318c of the management apparatus 300c executes the following process. The alert output unit 318c calculates the difference between the usage quantity of the member PT in the specific period specified by the quantity specifying unit 317 and the supply quantity of the member PT in the specific period from the quantity of the member PT stored in the supply quantity storage unit 336. When step S702d results in "Yes", that is, when the calculated difference exceeds the allowable range, it is determined that abnormality has occurred in the refill system 10, and step S703d is executed. In step S703d, the alert output unit 318c determines that there is a probability that unauthorized activity is performed or a trouble has occurred in the partner business operator PA, and outputs the alert via the notification device 370. When step S702d results in "No", that is, when the calculated difference falls within the allowable range, the alert output unit 318c performs the following process. In this case, the alert output unit 318c determines that the probability that unauthorized activity is performed or a trouble has occurred in the partner business operator PA is low, and finishes the present flow without outputting the alert.

According to the fourth embodiment, by comparing the usage quantity of the member PT in the specific period with the supply quantity of the member PT in the specific period, the management apparatus 300c can determine whether or not there is unauthorized activity or a trouble in the partner business operator PA, and output the alert.

### E. Other Embodiments

### E-1. Another Embodiment 1

The alert output units 318, 318b, and 318c may specify quality of the member PT used for producing the refill product RP and output the alert when the specified quality does not comply with a predetermined quality reference. For example, an aspect of any of (a) to (e) below may be conceived.
(a) The alert output units 318, 318b, and 318c may acquire an expiration date of use of the ink IN used for producing the refill product RP and output the alert when the expiration date of use of the ink IN passes. In such an aspect, a probability that the refill product RP filled with the ink IN of which the expiration date of use has passed is distributed in the market can be reduced.
(b) The alert output units 318, 318b, and 318c may acquire the replenishing amount of the ink IN when the refill product RP is produced, and output the alert when a difference between the acquired replenishing amount of the ink IN and a replenishing amount determined in advance in accordance with the products NP and RP exceeds an allowable range. In such an aspect, a probability that the refill product RP of which the replenishing amount of the ink IN deviates from a regular amount is distributed in the market can be reduced.
(c) The alert output units 318, 318b, and 318c may acquire the type of the ink IN used for producing the refill product RP and output the alert when the acquired type of the ink IN does not match the type of the ink IN determined in advance in accordance with the products NP and RP. In such an aspect, a probability that the refill product RP filled with the ink IN of a wrong type is distributed in the market can be reduced.
(d) The alert output units 318, 318b, and 318c may acquire the type of the accessory AS used for producing the refill product RP and output the alert when the acquired type of the accessory AS does not match the type of the accessory AS determined in advance in accordance with the products NP and RP. In such an aspect, a probability that the refill product RP to which the accessory AS of a wrong type is attached is distributed in the market can be reduced.
(e) The alert output units 318, 318b, and 318c may acquire the type of the packaging material PM used for producing the refill product RP and perform the following process. The alert output units 318, 318b, and 318c may output the alert when the acquired type of the packaging material PM does not match the type of the packaging material PM determined in advance in accordance with the products NP and RP. In such an aspect, a probability that the refill product RP using the packaging material PM of a wrong type is distributed in the market can be reduced. Accordingly, for example, a probability that the products NP and RP different from the products NP and RP desired by the user U are provided to the user because types of the products NP and RP displayed on the outer box, such as a supported model and an ink color of the printing apparatus 900 are different from the actual products NP and RP can be reduced. E-2. Another Embodiment 2

The management apparatuses 300 and 300a to 300c may further include an abnormality detection unit and an abnormality processing unit. The abnormality detection unit detects occurrence of abnormality in the operation of the refill apparatus 100, using the monitoring result of the monitoring device 130. When the abnormality detection unit detects the occurrence of the abnormality in the operation of the refill apparatus 100, the abnormality processing unit executes a process for the abnormality. The abnormality processing unit executes, for example, a process of at least one of a first process, a second process, and a third process. The first process is a process of providing notification of a probability that abnormality has occurred to at least one of the production business operator MA and the partner business operator PA. In the first process, the abnormality processing unit may provide the notification together with content of the abnormality and an expected solution. The second process is a process of providing notification of need for dispatching personnel to the business facility of the partner business operator PA to the production business operator MA. In the second process, the abnormality processing unit mechanically determines whether or not dispatching personnel is necessary in accordance with the content of the abnormality. In the second process, the abnormality processing unit may display, on the display device of the control apparatus 200, an inquiry screen for inquiring whether or not dispatching personnel is necessary of the partner business operator PA and determine the need for dispatching personnel in accordance with input content of the partner business operator PA via the input device 260. The third process is a process of calculating a compensation amount to be paid to the partner business operator PA in accordance with a loss caused by the abnormality. In the third process, for example, the abnormality processing unit calculates the compensation amount in accordance with a downtime of the refill apparatus 100 caused by the abnormality. In such an aspect, when abnormality occurs in the operation of the refill apparatus 100, the production business operator MA or the partner business operator PA can execute a process for eliminating the abnormality. The production business operator MA may eliminate the abnormality by remotely operating the refill apparatus 100 via the input device 260.

### E-3. Another Embodiment 3

The management apparatuses 300 and 300a to 300c may further include a guidance unit. The guidance unit prompts the partner business operator PA to provide maintenance of the refill apparatus 100 in accordance with the operation status of the refill operation. For example, when the refill operation is continuously executed a predetermined regular number of times or more, the guidance unit displays a guidance text for prompting maintenance of the refill apparatus 100 on the display device of the control apparatus 200. When the refill operation is continuously executed for a predetermined regular time or more, the guidance unit generates a buzzer sound for prompting maintenance of the refill apparatus 100 from the audio generation device of the control apparatus 200. In such an aspect, a probability that abnormality occurs in the refill apparatus 100 can be reduced. Accordingly, when abnormality occurs in the refill apparatus 100, a decrease in production efficiency of the refill product RP can be reduced.

### E-4. Another Embodiment 4

The production business operator MA may provide an incentive related to the refill production cost RC to the partner business operator PA in accordance with the operation status of the refill operation. For example, the production business operator MA may set the refill production cost RC to be higher as the number of produced refill products RP increases. In this case, for example, the cost calculation unit 319 may calculate the refill production cost RC by determining a coefficient in accordance with the operation status of the refill operation in the specific period and multiplying the determined coefficient by each term of the calculation formula. Alternatively, for example, the production business operator MA may set a discount rate of the refill production cost RC to be higher as the period of continuous use of the lent apparatuses 100 and 200 is longer. In this case, for example, the cost calculation unit 319 may calculate the refill production cost RC by acquiring the period of continuous use of the lent apparatuses 100 and 200, determining the coefficient in accordance with the acquired period of continuous use, and multiplying the determined coefficient by each term of the calculation formula. In such an aspect, production and sales of the refill product RP can be promoted.

### E-5. Another Embodiment 5

The refill apparatus 100 and the control apparatus 200 may be provided from the production business operator MA to the partner business operator PA by causing the partner business operator PA to purchase the refill apparatus 100 and the control apparatus 200. In this case, for example, the cost calculation unit 319 calculates the refill production cost RC including the cost of the member PT supplied from the production business operator MA to the partner business operator PA, without including the usage fee of the apparatuses 100 and 200 lent from the production business operator MA to the partner business operator PA. Even in such an aspect, the production business operator MA can cause the partner business operator PA to produce the refill product RP under management of the production business operator MA using the networks N1 and N2.

### E-6. Another Embodiment 6

When the same operation is executed a plurality of times for the same ink storage container IS, the operation status transmission unit 217 may transmit accessory information indicating that the same operation is executed a plurality of times, to the management apparatuses 300 and 300a to 300c together with the number of executions of the refill operation. In such an aspect, even when the same operation is executed a plurality of times for the same ink storage container IS, such as when the cleaning operation is executed a plurality of times for the same ink storage container IS in accordance with the cleaning level of the ink storage container IS, the following can be achieved. The management apparatuses 300 and 300a to 300c can more accurately calculate or specify the specific quantity such as the number of produced refill products RP and the usage quantity of the member PT, and the refill production cost RC using the operation status of the refill operation.

### E-7. Another Embodiment 7

At least a part of the functions of the refill apparatus 100 may be implemented by the control apparatus 200. At least a part of the functions of the control apparatus 200 may be implemented by the refill apparatus 100 or implemented by the management apparatuses 300 and 300a to 300c. In such an aspect, the configuration of the refill system 10 can be changed, as appropriate.

### E-8. Another Embodiment 8

The above technology is not limited to the consumables such as the ink storage container IS related to the use of the printing apparatus 900 and can also be applied to when a container that can be refilled with contents is collected and cleaned, and the cleaned container is replenished with the contents to produce the refill product RP. That is, the contents accommodated in the container may be, for example, a detergent other than the ink IN. When the above technology is applied to a target other than the ink storage container IS, the term "ink storage container" in the present disclosure can be replaced with "container", as appropriate, and the term "ink" can be replaced with "contents", as appropriate. In such an aspect, versatility of the refill system 10 can be improved.

### E-9. Another Embodiment 9

In the above embodiments, at least a part of the configurations implemented by hardware may be replaced with software, and at least a part of the configurations implemented by software can be implemented by hardware such as a circuit configuration.

### F. Other Aspects

The present disclosure is not limited to the above embodiments and can be implemented with various configurations without departing from the concept thereof. For example, technical features of embodiments corresponding to the technical features in each aspect according to SUMMARY can be replaced or combined, as appropriate, to address some or all of the above issues or to achieve some or all of the above effects. In addition, unless the technical features are described as being essential in the present specification, the technical features can be deleted, as appropriate.
(1) According to an aspect of the present disclosure, there is provided a refill system. The refill system includes a refill apparatus that executes a refill operation on a container, a control apparatus that controls the refill operation of the refill apparatus, and a management apparatus that manages the control apparatus, in which the control apparatus and the management apparatus are configured to communicate with each other via a network. According to this aspect, the refill system can cause another business operator to produce a refill product and distribute the refill product again in the market under management of the production business operator using the network.
(2) In the above aspect, the control apparatus may include an identification information transmission unit that transmits identification information to the management apparatus, and the management apparatus may include an identification information storage unit that stores identification information of the control apparatus in advance, and a permission signal transmission unit that permits the control apparatus to perform the refill operation of the refill apparatus when the identification information received from the identification information transmission unit matches the identification information stored in the identification information storage unit. According to this aspect, when the identification information received from the control apparatus owned by the other business operator other than the production business operator matches the identification information stored in the management apparatus owned by the production business operator, the refill system can permit the refill operation of the refill apparatus owned by the other business operator. Accordingly, the refill system can cause the other business operator to produce the refill product and distribute the refill product again in the market under management of the production business operator using the network.
(3) In the above aspect, the refill operation may include at least one of an operation of inspecting an exterior of the container, an operation of replenishing the container with contents, an operation of detaching an accessory of the container for replacement, an operation of attaching the accessory of the container, and an operation of packaging the container, the control apparatus may further include an operation status transmission unit that transmits operation status of the refill operation including the number of executions of the refill operation and an operation time of the refill operation in a predetermined period to the management apparatus, and the management apparatus may further include a first number calculation unit that calculates the number of produced refill products using the number of executions of the refill operation received from the operation status transmission unit, a second number calculation unit that calculates the number of produced refill products using the operation time of the refill operation received from the operation status transmission unit, and an alert output unit that outputs an alert when a difference between the number of produced refill products calculated by the first number calculation unit and the number of produced refill products calculated by the second number calculation unit exceeds a predetermined range. According to this aspect, the refill system can output the alert when the difference between the number of produced refill products calculated by the first number calculation unit and the number of produced refill products calculated by the second number calculation unit exceeds the predetermined range. Accordingly, the refill system can notify the production business operator of a probability that unauthorized activity is performed or a trouble has occurred in the other business operator who produces the refill product.
(4) In the above aspect, the refill operation may include at least one of an operation of inspecting an exterior of the container, an operation of replenishing the container with contents, an operation of detaching an accessory of the container for replacement, an operation of attaching the accessory of the container, and an operation of packaging the container, the control apparatus may further include an operation status transmission unit that transmits operation status of the refill operation including at least one of the number of executions of the refill operation and an operation time of the refill operation in a predetermined period to the management apparatus, and the management apparatus may further include a quantity storage unit that stores a necessary member quantity correlated with at least one of the number of executions of the refill operation and the operation time of the refill operation in the period, and a quantity specifying unit that specifies a quantity of a member used for producing the refill product based on the operation status received from the operation status transmission unit and the necessary member quantity stored in the quantity storage unit. According to this aspect, the refill system can specify the quantity of the member used for producing the refill product. Accordingly, the refill system can supply the member of an appropriate quantity from the production business operator to the other business operator who produces the refill product, at an appropriate time.
(5) In the above aspect, the refill operation may include at least one of an operation of inspecting an exterior of the container, an operation of replenishing the container with contents, an operation of detaching an accessory of the container for replacement, an operation of attaching the accessory of the container, and an operation of packaging the container, the control apparatus may further include an operation status transmission unit that transmits operation status of the refill operation including at least one of the number of executions of the refill operation and an operation time of the refill operation in a predetermined period to the management apparatus, and the management apparatus may further include a cost calculation unit that calculates a refill production cost in the period based on a specific quantity correlated with the operation status of the refill operation. According to this aspect, the refill system can calculate the refill production cost based on the specific quantity correlated with the operation status of the refill operation.

Not all of a plurality of constituents included in each aspect of the present disclosure described above are essential. To address some or all of the above issues or to achieve some or all of the effects according to the present specification, some of the plurality of constituents can be changed, deleted, or replaced with other new constituents, as appropriate, and some of limiting contents can be deleted. In addition, to address some or all of the above issues or to achieve some or all of the effects according to the present specification, some or all of the technical features included in one aspect of the present disclosure described above can be combined with some or all of the technical features included in another aspect of the present disclosure described above to form an independent aspect of the present disclosure.

The present disclosure can also be implemented in various aspects other than the refill system. For example, the present disclosure can be implemented in aspects such as a production management method of a refill product using a refill system, a manufacturing method of a refill system, a control method of a refill system, a computer program implementing the control method, and a non-transitory recording medium on which the computer program is recorded.

## Claims

1. A refill system comprising:
a refill apparatus that executes a refill operation on a container;
a control apparatus that controls the refill operation of the refill apparatus; and
a management apparatus that manages the control apparatus, wherein
the control apparatus and the management apparatus are configured to communicate with each other via a network.

2. The refill system according to claim 1, wherein
the control apparatus includes an identification information transmission unit that transmits identification information to the management apparatus, and
the management apparatus includes an identification information storage unit that stores identification information of the control apparatus in advance, and a permission signal transmission unit that permits the control apparatus to perform the refill operation of the refill apparatus when the identification information received from the identification information transmission unit matches the identification information stored in the identification information storage unit.

3. The refill system according to claim 1, wherein
the refill operation includes at least one of an operation of inspecting an exterior of the container, an operation of replenishing the container with contents, an operation of detaching an accessory of the container for replacement, an operation of attaching the accessory of the container, and an operation of packaging the container,
the control apparatus further includes an operation status transmission unit that transmits operation status of the refill operation including the number of executions of the refill operation and an operation time of the refill operation in a predetermined period to the management apparatus, and
the management apparatus further includes
a first number calculation unit that calculates the number of produced refill products using the number of executions of the refill operation received from the operation status transmission unit,
a second number calculation unit that calculates the number of produced refill products using the operation time of the refill operation received from the operation status transmission unit, and
an alert output unit that outputs an alert when a difference between the number of produced refill products calculated by the first number calculation unit and the number of produced refill products calculated by the second number calculation unit exceeds a predetermined range.

4. The refill system according to claim 1, wherein
the refill operation includes at least one of an operation of inspecting an exterior of the container, an operation of replenishing the container with contents, an operation of detaching an accessory of the container for replacement, an operation of attaching the accessory of the container, and an operation of packaging the container,
the control apparatus further includes an operation status transmission unit that transmits operation status of the refill operation including at least one of the number of executions of the refill operation and an operation time of the refill operation in a predetermined period to the management apparatus, and
the management apparatus further includes
a quantity storage unit that stores a necessary member quantity correlated with at least one of the number of executions of the refill operation and the operation time of the refill operation in the period, and
a quantity specifying unit that specifies a quantity of a member used for producing a refill product based on the operation status received from the operation status transmission unit and the necessary member quantity stored in the quantity storage unit.

5. The refill system according to claim 1, wherein
the refill operation includes at least one of an operation of inspecting an exterior of the container, an operation of replenishing the container with contents, an operation of detaching an accessory of the container for replacement, an operation of attaching the accessory of the container, and an operation of packaging the container,
the control apparatus further includes an operation status transmission unit that transmits operation status of the refill operation including at least one of the number of executions of the refill operation and an operation time of the refill operation in a predetermined period to the management apparatus, and
the management apparatus further includes a cost calculation unit that calculates a refill production cost in the period based on a specific quantity correlated with the operation status of the refill operation.
